# EUROPÄISCHE PATENTSCHRIFT

(11) **EP 3 369 946 B1**
(45) Veröffentlichungstag und Bekanntmachung des Hinweises auf die Patenterteilung: **25.12.2019**
(21) Anmeldenummer: 18156390.9
(22) Anmeldetag: 13.02.2018
(51) Int. Cl.: F16B 13/00

(54) **FLACHDÜBEL UND VERFAHREN ZUM ANBRINGEN EINES FLACHDÜBELS IN EINER MAUER**
FLAT DOWEL AND METHOD FOR APPLYING A FLAT DOWEL IN A WALL
CHEVILLE PLATE ET PROCÉDÉ DE MONTAGE D'UNE CHEVILLE PLATE DANS UNE PAROI

(30) Priorität: 01.03.2017 DE 202017101139 U; 19.07.2017 DE 102017116298
(43) Veröffentlichungstag der Anmeldung: 05.09.2018
(73) Patentinhaber: Steinbrunner, Christian, 84385 Egglham (DE); Häringer, Josef, 84385 Egglham (DE)
(72) Erfinder: Steinbrunner, Christian, 84385 Egglham (DE); Häringer, Josef, 84385 Egglham (DE)
(74) Vertreter: Reichert & Lindner Partnerschaft Patentanwälte

(56) Entgegenhaltungen:
- EP-A1- 2 781 769
- WO-A1-2017/158454

## Beschreibung

Die Erfindung betrifft einen Flachdübel.

Ferner betrifft die Erfindung ein Verfahren zum Anbringen eines Fachdübels in einer in einem Mauerwerk ausgebildeten Aussparung.

Die deutsche Offenlegungsschrift DE 195 01 449 weist einen runden Zwangsspreizkeildübel auf. Bei dem Zwangsspreizkeildübel ist ein Schlagkeil mit einer Sollbruchstelle vorgesehen.

Die deutsche Offenlegungsschrift DE 197 56 764 betrifft einen Steckdübel aus Kunststoff mit mindestens einem in ein Bohrloch einzuführenden Schaft. An dem Schaft sind paarweise gegenüberliegend Spreizsegmente vorgesehen, die sich bei einer am Schaft angreifenden Zugkraft gegen die Bohrlochwandung abstützen und verkeilen.

Das deutsche Gebrauchsmuster DE 20 2011 101 115 offenbart einen Dübel mit einem einen Längsschlitz aufweisenden Schaft. Der Schaft oder zumindest ein Teil des Schaftes ist ovalförmig ausgebildet.

Die europäische Patentanmeldung EP 0 841 491 offenbart ein in ein Sackloch einsetzbares Befestigungselement. Hierbei sind eine Hülse mit einem Anschlagflansch und einem Schaftteil sowie ein Aufweitdorn mit einem Kopf und einem Zugstift vorgesehen. Dieses Befestigungselement kann zur Befestigung eines Profilteiles in ein Sackloch einer Verkleidungsplatte eingebracht werden. Durch Herausziehen des Aufweitdorns wird der Schaftteil der Hülse radial aufgeweitet, so dass sich die Erhebungen in Form eines Gewindeabschnittes in die Bohrungswandung des Sackloches einpressen.

Die deutsche Offenlegungsschrift DE 10 2013 204 704 A1 betrifft ein in einer Öffnung eines Bauteils werkzeuglos befestigbares Montageelement. Das Montageelement ist in Dicken- und Breitenerstreckung nicht aufweitbar und weist an seiner Außenseite mindestens eine durch eine Berandung begrenzte Aussparung auf, in die von einem Randbereich der Aussparung abstehend ein rückstellfähiger Widerhakenarm mit einem Widerhakenvorsprung an seinem freien Ende hineinragt. Beim Hindurchschieben durch eine hintergreifbare Öffnung des Bauteils führt dies zu einer Krümmung des Widerhakenarms unter Bildung einer auf den Widerhakenarm wirkenden Rückstellkraft zum Hintergreifen der Öffnung des Bauteils durch den Widerhakenvorsprung.

Die deutsche Offenlegungsschrift DE 10 2011 003 290 A1 offenbart eine Betonschraube mit einen Schaftabschnitt und einem Gewindeabschnitt, der am vorderen Ende der Betonschraube angeordnet und mit mindestens einem Spreizschlitz versehen ist. Ferner ist ein Spreizelement vorgesehen, das dem Spreizschlitz derart zugeordnet ist, dass das Spreizelement während des Einschraubens den Spreizschlitz aufweitet.

Die deutsche Offenlegungsschrift DE 27 41 422 offenbart einen Spreizdübel mit rechteckigem Querschnitt.

Die deutsche Offenlegungsschrift DE 198 24 594 offenbart ein Befestigungselement mit Schaft, Schwenkhebeln und Halteflächen, dessen Halteflächen großflächig an einer Bohrlochwand anliegen und keine Abrollbewegung der Halteelemente zulassen. Dies wird dadurch erreicht, dass Schwenkhebel und Haltefläche getrennt voneinander ausgebildet sind und mindestens ein verschwenkbarer Schwenkhebel über elastische Filmscharniere zwischen einer Haltefläche und dem Schaft angeordnet ist.

Die deutsche Patentschrift DE 934 472 offenbart eine Haltevorrichtung für Blätter. Ein Keil ist in einer Ausnehmung verschieblich angeordnet, um die in einer Längsnut angeordneten Blätter einzuklemmen. Die Halterung für die Blätter ist kein Flachdübel im Sinne der Erfindung.

Die deutsche Gebrauchsmusterschrift DE 201 04 307 U1 betrifft eine Drehschraube aus zwei symmetrischen Schraubenhälften, die jeweils ein Außengewinde aufweisen. Zwischen die zwei Schraubenhälften kann eine Einlegeplatte mit einem gezahnten Oberflächenabschnitt eingelegt werden. Die gezahnten Oberflächenabschnitte wirken mit entsprechend gezahnten Oberflächenabschnitten der Schraubenhälften zusammen. Die Schraubenhälften und die Einlegeplatte sind kein Flachdübel im Sinne der Erfindung.

Die deutsche Gebrauchsmusterschrift DE 201 04 307 U1 betrifft ein Befestigungselement für die Befestigung eines Möbelbeschlagteils. Es ist kein Flachdübel im Sinne der Erfindung offenbart. EP 2 781 769 A1 beschreibt eine Befestigungsanordnung.

Die internationale Patentanmeldung PCT/IB2017/051000 offenbart ein Befestigungselement und ein Verfahren zum Anbringen desselben. Das Befestigungselement besteht aus zwei gegenüberliegenden und voneinander beabstandeten Elementen, die flächig ausgebildet sind. Die beiden beabstandeten Elemente sind mittels eines Halteelements zusammengehalten, wobei das Mittelteil zwischen den beabstandeten Elementen linear beweglich ist. Der Aufbau des Flachdübels ist durch das Halteelement schwierig und nicht kostengünstig sowie nicht variabel in seiner Dimension herzustellen.

Der Erfindung liegt die Aufgabe zugrunde, einen Flachdübel zu schaffen, der einfach anzubringen ist, kostengünstig herzustellen ist, unabhängig von der Geometrie des Schlitzes verwendbar ist und sicher in einer Wand oder einem Material hält, wobei die Montage von zu befestigenden Elementen am Flachdübel erleichtert und ein sicherer Halt der montierten Elemente sichergestellt ist.

Diese Aufgabe wird durch einen Flachdübel gelöst, der die Merkmale des Anspruchs 1 umfasst.

Ferner ist es Aufgabe der Erfindung, ein Verfahren zum Anbringen eines Flachdübels zu schaffen, so dass unabhängig von der Geometrie des Schlitzes der Flachdübel sicher in einer Wand oder einem Material hält, wobei die Montage von zu befestigenden Elementen am Flachdübel erleichtert und ein sicherer Halt der montierten Elemente sichergestellt ist.

Diese Aufgabe wird durch einen Verfahren zum Anbringen eines Fachdübels in einer Mauer gelöst, das die Merkmale des Anspruchs 11 umfasst.

Der erfindungsgemäße Flachdübel umfasst zwei gegenüberliegende und voneinander beabstandete Elemente die im Wesentlichen durch ein Mittelteil voneinander beabstandet sind. Jedes der beiden Elemente weist ein erstes Ende und ein zweites Ende auf. Die beiden Elemente definieren eine innere Seitenfläche und eine äußere Seitenfläche, die jeweils eine Topologie ausgebildet haben. Das Mittelteil definiert eine erste Seitenfläche und eine zweite Seitenfläche, die ebenfalls jeweils eine Topologie ausgebildet haben. Das Mittelteil und die beiden Elemente wirken form- und kraftschlüssig zusammenwirken, wobei das Mittelteil dennoch eine relative Beweglichkeit zwischen dem ersten Ende und dem zweiten Ende der beiden Elemente besitzt. Die beiden voneinander beabstandeten Elemente und das Mittelteil bilden eine Einheit.

Gemäß einer erfindungsgemäßen Ausführungsform kann der Flachdübel flächig ausgebildet sein. Die beabstandeten Elemente haben an einem ersten Ende eine im Wesentlichen lineare Kontur und an einem zweiten Ende eine konvex geformte Kontur ausgebildet. Ebenso bilden die voneinander beabstandeten Elemente und das Mittelteil eine Einheit. Dies hat den Vorteil, dass der Flachdübel als Einheit montiert und transportiert werden kann. Es können keine Teile des Flachdübels verloren gehen.

Gemäß einer bevorzugten Ausführungsform kann das Mittelteil aus einer Vielzahl von Elementen bestehen. Die beiden voneinander beabstandeten Elemente können ebenfalls aus einer Vielzahl von Elementen bestehen. Die Elemente des Mittelteils und die Elemente eines jeden der beabstandeten Elemente umfassen eine Vielzahl sich parallel zwischen dem ersten Ende zum zweiten Ende erstreckende und stoffschlüssig miteinander verbundene Elemente.

Die Elemente des Mittelteils können gemäß einer möglichen Ausführungsform der Erfindung unmittelbar aneinandergrenzen und sind somit stoffschlüssig miteinander verbunden. Auch die Elemente der beiden voneinander beabstandeten Elemente können unmittelbar aneinandergrenzen und sind somit stoffschlüssig miteinander verbunden.

Gemäß einer möglichen Ausführungsform kann ein Flachdübel derart von einem Block abgetrennt werden, dass eine Trennlinie im Wesentlichen parallel zu den Elementen des Mittelteils und den Elementen der voneinander beabstandeten Elemente verläuft.

Die Elemente des Mittelteils können gemäß einer weiteren möglichen Ausführungsform der Erfindung voneinander beabstandet sein. Die Elemente sind jeweils über mindestens eine Materialbrücke stoffschlüssig miteinander verbunden.

Ebenso sind die Elemente der beiden voneinander beabstandeten Elemente voneinander beabstandet und jeweils über mindestens eine Materialbrücke stoffschlüssig miteinander verbunden.

Gemäß einer weiteren möglichen Ausführungsform kann der mindestens eine Flachdübel derart von einem Block abgetrennt werden, dass der Flachdübel an der mindestens einen Materialbrücke des Mittelteils und an der mindestens einen Materialbrücke der voneinander beabstandeten Elemente durchtrennt wird. Eine Trennlinie verläuft parallel zu den Elementen des Mittelteils und den Elementen der voneinander beabstandeten Elemente.

Die mindestens eine Materialbrücke des Mittelteils und/oder die mindestens eine Materialbrücke der voneinander beabstandeten Elemente kann aus dem gleichen Material wie die Elemente des Mittelteils oder die Elemente der voneinander beabstandeten Elemente bestehen.

Das Mittelteil besitzt mehrere einzelne und voneinander separierte Materialbrücken zwischen den Elementen des Mittelteils. Dies hat den Vorteil, dass eine Beweglichkeit der Elemente des Mittelteils aus einer definierten Ebene des Mittelteils heraus ermöglicht ist.

Bei jedem der beabstandeten Elemente ist die mindestens eine oder sind die mehreren einzelnen und voneinander separierten Materialbrücken zwischen den Elementen der voneinander beabstandeten Elemente derart ausgebildet, dass eine Beweglichkeit der Elemente eines jedem der beabstandeten Elemente aus einer definierten Ebene der beabstandeten Elemente heraus ermöglicht ist.

Im nicht montierten Zustand des Flachdübels überragt das zweite Ende der beabstandeten Elemente das zweite Ende des linear beweglichen Mittelteils. Im montierten Zustand hat sich ein erstes Ende des Mittelteils einem ersten Ende der beabstandeten Elemente angenähert.

Jeweils ein Element des ersten Elements und ein Element des zweiten Elements definieren eine innere Seitenfläche, die eine Topologie aus einer Vielzahl von Abschrägungen aufweist. Die Abschrägungen sind derart ausgebildet, dass die Abschrägungen in Richtung auf das zweite Ende und in Richtung auf eine zentrale Ebene des Flachdübels hin verlaufen.

Die innere Seitenfläche der beiden Elemente des ersten Elements und des zweiten Elements hat ferner in einem Bereich der mindestens einen Abschrägung eine Raststruktur ausgebildet. Die Raststruktur wirkt mit mindestens einem Rastelement des Elements des Mittelteils formschlüssig zusammen.

Eine erste Seitenfläche des ersten Elements und des zweiten Elements des Mittelteils und eine zweite Seitenfläche des ersten Elements und des zweiten Elements des Mittelteils weist jeweils mindestens eine Abschrägung auf, die in Richtung auf das zweite Ende und in Richtung auf eine zentrale Ebene des Flachdübels hin verlaufen.

Die Abschrägungen der Elemente des ersten Elements und des zweiten Elements haben in einem Bereich der mindestens einen Abschrägung eine Raststruktur ausgebildet, die mit mindestens einem Rastelement der Abschrägung des Elements oder Elements des Mittelteils formschlüssig zusammenwirkt. Die Abschrägungen der Elemente des ersten Elements und des zweiten Elements haben in einem Bereich der mindestens einen Abschrägung eine Raststruktur ausgebildet, die mit mindestens einem Rastelement der Abschrägung eines der beiden Elemente des Mittelteils formschlüssig zusammenwirkt.

Um eine sichere Klemmung des Flachdübels zu erreichen, hat eine Innenfläche eines jeden der beabstandeten Elemente die Abschrägungen ausgebildet, die mit gegenüberliegenden Abschrägungen des Mittelteils zusammenwirken, so dass eine Klemmwirkung des Flachdübels erzeugt und gehalten wird. Die Abschrägungen können jeweils Reibflächen tragen, die ein Zurückrutschen des Mittelteils aus der Klemmposition verhindern. Die Klemmwirkung des Flachdübels wird durch eine jeweils entgegengesetzte Bewegung der beiden beabstandeten Elemente nach Außen erzeugt, wobei sich die Höhe des montierten Flachdübels im Vergleich zum nicht montierten Flachdübel vergrößert.

Eine besonders vorteilhafte Ausgestaltung der äußeren Seitenfläche der beabstandeten Elemente ist, dass die Höhe der Abschrägungen, die die Topologie eines Elements bilden, größer ist als die Höhe der Abschrägungen, die die Topologie eines anderen und benachbarten Elements bilden. Die Abschrägungen der Elemente besitzen eine größere Höhe, die in Richtung auf das zweite Ende hin geneigt sind. Dies hat den Vorteil, dass diese Abschrägungen den Auszug des in der Mauer montierten Flachdübels erschweren bzw. unmöglich machen.

Es ist von Vorteil, wenn der erfindungsgemäße Flachdübel aus einem einzigen Kunststoff oder aus einer Kombination von zwei oder mehreren Kunststoffen hergestellt ist.

Die erfinderische Idee für die Ausgestaltung eines Flachdübels kann in analoger Weise auch auf einen Flachdübel angewendet werden, der aus einem ersten Teil und einem zweiten Teil besteht. Der erste Teil und der zweite Teil besitzt jeweils zwei gegenüberliegende und voneinander beabstandete Elemente. Die beabstandeten Elemente des ersten Teils und des zweiten Teils haben an einem jeweiligen ersten Ende eine im Wesentlichen lineare Kontur. Zwischen den beiden Elementen des ersten Teils und des zweiten Teils ist jeweils ein zwischen dem ersten Ende und dem zweiten Ende linear bewegliches Mittelteil vorgesehen. Der erste Teil und der zweite Teil sind derart miteinander über mindestens ein Verbindungselement verbunden, dass die lineare Kontur des ersten Teils und des zweiten Teils unter einem Winkel zueinander angeordnet sind.

Das erfindungsgemäße Verfahren zum Anbringen eines Fachdübels in einer Mauer zeichnet sich durch einen Fachdübel aus, der zwei gegenüberliegende und voneinander beabstandete Elemente und ein dazwischen in Richtung auf ein erstes Ende oder ein zweites Ende linear bewegliches Mittelteil besitzt. Die beiden Elemente definieren eine innere Seitenfläche und eine äußere Seitenfläche, die jeweils eine Topologie ausgebildet haben. Das Mittelteil definiert eine erste Seitenfläche und eine zweite Seitenfläche, die ebenfalls jeweils eine Topologie ausgebildet haben. Das Mittelteil und die beiden Elemente wirken form- und kraftschlüssig zusammen und das Mittelteil besitzt dennoch eine relative Beweglichkeit zwischen dem ersten Ende und dem zweiten Ende der beiden Elemente. Das Verfahren ist durch die folgenden Schritte gekennzeichnet:
- dass ein länglicher Schlitz in die Mauer eingebracht wird, der eine Höhe und eine Breite besitzt;
- dass der Flachdübel hinsichtlich seinen Abmessungen derart angepasst wird, dass er zumindest eine Breite besitzt, die kleiner ist als die Breite des länglichen Schlitzes und eine Höhe besitzt, die kleiner ist als die Höhe des länglichen Schlitzes in der Mauer; und
- dass zumindest ein Mittelteil des Fachdübels derart relativ zwischen dem ersten Ende und dem zweiten Ende der beiden Elemente bewegt wird, dass der Flachdübel seine Höhe vergrößert und im Schlitz geklemmt wird.

Die Anpassung der Abmessungen des Flachdübels an die Breite des länglichen Schlitzes wird derart durchgeführt, dass ein Teil des Flachdübels abgetrennt wird, so dass die Breite des abgetrennten Teils des Flachdübels kleiner ist als die Breite des länglichen Schlitzes.

Ferner kann die Anpassung der Abmessungen des Flachdübels an die Breite des länglichen Schlitzes derart durchgeführt werden, dass mindestens zwei Flachdübel übereinander angeordnet werden, so dass die Höhe des zusammengesetzten Flachdübels kleiner ist als die Höhe des länglichen Schlitzes. Auch hier ist es so, dass jeweils gegenüberliegende Elemente der Flachdübelelemente mit ihrer definierten Topologie form- und kraftschlüssig zusammenwirken und so den für die Montage erforderlichen Flachdübel ergeben.

Bei einer weiteren Ausführungsform der Erfindung kann die Anpassung der Abmessungen des Flachdübels an die Breite und die Höhe des länglichen Schlitzes derart durchgeführt werden, dass mehrere Flachdübel derart mittels der Topologie der gegenüberliegenden Elemente der Flachdübel form- und kraftschlüssig zusammengesetzt werden, dass der zusammengesetzte Flachdübel eine Breite und eine Höhe besitzt, die kleiner ist als die Breite und die Höhe des länglichen Schlitzes.

Für die Montage des Flachdübels in der Mauer oder dem Mauerwerk kann eine Montagehilfe verwendet werden. Hierzu wird auf dem im länglichen Schlitz sitzenden Flachdübel die Montagehilfe geklemmt. Die Montageschrauben werden durch Führungen der Montagehilfe beim Einschrauben geführt. Die Montageschrauben werden dabei in den Flachdübel und das Mauerwerk eingedreht. Die eingedrehten Montageschrauben können jeweils seitlich vom Flachdübel aus in das Mauerwerk ragen. Wenn die Montageschrauben lang genug sind, können die Montageschrauben auch seitlich aus dem Mauerwerk ragen und so eine mechanische Verbindung zu angrenzenden Mauerabschnitten herstellen.

Weitere Vorteile und vorteilhafte Ausgestaltungen der Erfindung sind Gegenstand der nachfolgenden Figuren sowie deren Beschreibungsteile.

Es zeigen im Einzelnen:
- Figur 1: eine perspektivische Ansicht auf eine mögliche Ausführungsform des erfindungsgemäßen Flachdübels;
- Figur 2: eine Seitenansicht der in Fig. 1 dargestellten Ausführungsform des erfindungsgemäßen Flachdübels, wobei der Flachdübel noch nicht benutzt ist;
- Figur 3: eine perspektivische Ansicht einer Ausführungsform des Flachdübels, bei dem das Mittelteil nicht zwischen die voneinander beabstandeten Elemente eingeschoben ist;
- Figur 4: eine Draufsicht auf die Ausführungsform des Flachdübels aus Figur 3, bei der das Mittelteil nicht eingeschoben ist;
- Figur 5: eine Stirnansicht des Flachdübels der Ausführungsform aus Figur 4;
- Figur 6: eine Seitenansicht des Flachdübels der Ausführungsform aus Figur 4;
- Figur 7: eine Schnittansicht des Flachdübels der Ausführungsform aus Figur 4 entlang der in Figur 4 mit 1-1 gekennzeichneten Schnittlinie;
- Figur 8: eine Schnittansicht des Flachdübels der Ausführungsform aus Figur 4 entlang der in Figur 4 mit 2-2 gekennzeichneten Schnittlinie;
- Figur 9: eine Schnittansicht des Flachdübels der Ausführungsform aus Figur 4 entlang der in Figur 4 mit 3-3 gekennzeichneten Schnittlinie;
- Figur 10: eine perspektivische Ansicht der Ausführungsform des Flachdübels aus Figur 3, wobei das Mittelteil vollständig zwischen die voneinander beabstandeten Elemente eingeschoben ist;
- Figur 11: eine Draufsicht auf die Ausführungsform des Flachdübels aus Figur 3, bei der das Mittelteil vollkommen eingeschoben ist;
- Figur 12: eine Stirnansicht des Zustands des Flachdübels aus Figur 11;
- Figur 13: eine Seitenansicht des Zustands des Flachdübels aus Figur 11;
- Figur 14: eine Schnittansicht des Flachdübels entlang der in Figur 11 mit 1-1 gekennzeichneten Schnittlinie;
- Figur 15: eine Schnittansicht des Flachdübels entlang der in Figur 11 mit 2-2 gekennzeichneten Schnittlinie
- Figur 16: eine Schnittansicht des Flachdübels entlang der in Figur 11 mit 3-3 gekennzeichneten Schnittlinie;
- Figur 17: eine perspektivische Ansicht einer äußeren Seitenfläche eines der beabstandeten Elemente des Flachdübels;
- Figur 18: eine vergrößerte Darstellung des in Figur 17 mit A gekennzeichneten Bereichs;
- Figur 19: eine perspektivische Ansicht einer inneren Seitenfläche eines der beabstandeten Elemente des Flachdübels;
- Figur 20: eine vergrößerte Darstellung des in Figur 19 mit A gekennzeichneten Bereichs;
- Figur 21: eine Draufsicht auf die Ausführungsform der inneren Seitenfläche eines der beabstandeten Elemente des Mittelteils aus Figur 19;
- Figur 22: eine Stirnansicht eines der beabstandeten Elemente des Flachdübels aus Figur 21;
- Figur 23: eine Seitenansicht eines der beabstandeten Elemente des Flachdübels aus Figur 21;
- Figur 24: eine Schnittansicht eines der beabstandeten Elemente des Flachdübels entlang der in Figur 21 mit A-A gekennzeichneten Schnittlinie;
- Figur 25: eine Schnittansicht eines der beabstandeten Elemente des Flachdübels entlang der in Figur 21 mit B-B gekennzeichneten Schnittlinie;
- Figur 26: eine Schnittansicht eines der beabstandeten Elemente des Flachdübels entlang der in Figur 21 mit C-C gekennzeichneten Schnittlinie;
- Figur 27: eine vergrößerte Darstellung des in Figur 25 mit D gekennzeichneten Bereichs;
- Figur 28: eine perspektivische Teilansicht einer Ausführungsform des Mittelteils des Flachdübels;
- Figur 29: eine Draufsicht auf eine mögliche Ausführungsform des Mittelteils;
- Figur 30: eine Stirnansicht des Mittelteils des Flachdübels aus Figur 29;
- Figur 31: eine Seitenansicht des Mittelteils des Flachdübels aus Figur 29;
- Figur 32: eine Schnittansicht des Mittelteils entlang der in Figur 29 mit A-A gekennzeichneten Schnittlinie;
- Figur 33: eine vergrößerte Darstellung des in Figur 32 mit D gekennzeichneten Bereichs;
- Figur 34: eine Schnittansicht des Mittelteils entlang der in Figur 29 mit B-B gekennzeichneten Schnittlinie;
- Figur 35: eine Schnittansicht des Mittelteils entlang der in Figur 29 mit C-C gekennzeichneten Schnittlinie;
- Figur 36: eine Draufsicht auf eine mögliche Ausführungsform des Mittelteils;
- Figur 37: eine Detailansicht des in Figur 36 mit A gekennzeichneten Bereichs;
- Figur 38: eine Detailansicht des in Figur 36 mit P gekennzeichneten Bereichs;
- Figur 39: eine Draufsicht auf die Ausführungsform des Flachdübels aus Fig. 1 im ungenutzten Zustand;
- Figur 40: eine Seitenansicht des Flachdübels aus Fig. 39 im ungenutzten Zustand;
- Figur 41: eine Seitenansicht des Flachdübels aus Fig. 39, der in den Schlitz eines Mauerwerls eingesetzt, aber noch nicht verklemmt ist:
- Figur 42: eine Stirnansicht auf die Ausführungsform des Flachdübels aus Fig. 1 im ungenutzten Zustand;
- Figur 43: eine Draufsicht auf die Ausführungsform des Flachdübels aus Fig. 1 im benutzten Zustand;
- Figur 44: eine Seitenansicht des Flachdübels aus Fig. 39, der in den Schlitz eines Mauerwerks eingesetzt und verklemmt ist:
- Figur 45: eine Stirnansicht auf die Ausführungsform des Flachdübels aus Fig. 1 im benutzten Zustand;
- Figur 46: eine schematische Darstellung der Konfektionierung eines Flachdübels;
- Figur 47: eine schematische Darstellung der Konfektionierung eines Flachdübels aus mehreren Einzelteilen, die die Merkmale der Ausführungsform aus Figur 1 umfassen;
- Figur 48: eine schematische Darstellung einer weiteren möglichen Ausführungsform des erfindungsgemäßen Flachdübels
- Figur 49: eine schematische Darstellung eines Werkzeugs in Wirkzusammenhang mit einem im Mauerwerk zu befestigenden Flachdübel;
- Figur 50: eine schematische Darstellung des Werkzeugs in Wirkzusammenhang mit einem im Mauerwerk befestigten bzw. geklemmten Flachdübel;
- Figur 51: eine schematische Darstellung einer Montagehilfe zur Verankerung des erfindungsgemäßen Flachdübels in einem Mauerwerk;
- Figur 52: eine schematische Darstellung der Zuordnung der Montagehilfe zu dem im Schlitz des Mauerwerks sitzenden Flachdübel;
- Figur 53: eine schematische Darstellung eines Schlitzes im Mauerwerk und eines in den Schlitz eingesetzten Flachdübels;
- Figur 54: eine schematische Darstellung des mit Montageschrauben im Mauerwerk montierten Flachdübels;
- Figur 55: eine schematische Darstellung des mit Montageschrauben im Mauerwerk montierten Flachdübels und einer Befestigungsschraube für ein zu montierendes Bauteil;
- Figur 56: eine Draufsicht auf eine mögliche weitere Ausführungsform einer Montagehilfe;
- Figur 57: eine Seitenansicht einer möglichen Ausführungsform der Montagehilfe aus Figur 56; und
- Figur 58: die Montagehilfe aus Figur 57 in Wirkzusammenhang mit dem erfindungsgemäßen Flachdübel.

Für gleiche oder gleich wirkende Elemente der Erfindung werden identische Bezugszeichen verwendet. Die dargestellten Ausführungsbeispiele stellen lediglich Ausführungsformen dar, wie ein Flachdübel ausgestaltet werden kann. Es ist für einen Fachmann selbstverständlich, dass die hier dargestellten Ausführungsformen der Flachdübel und deren Anbringung lediglich eine Auswahl aus verschiedenen Möglichkeiten sind.

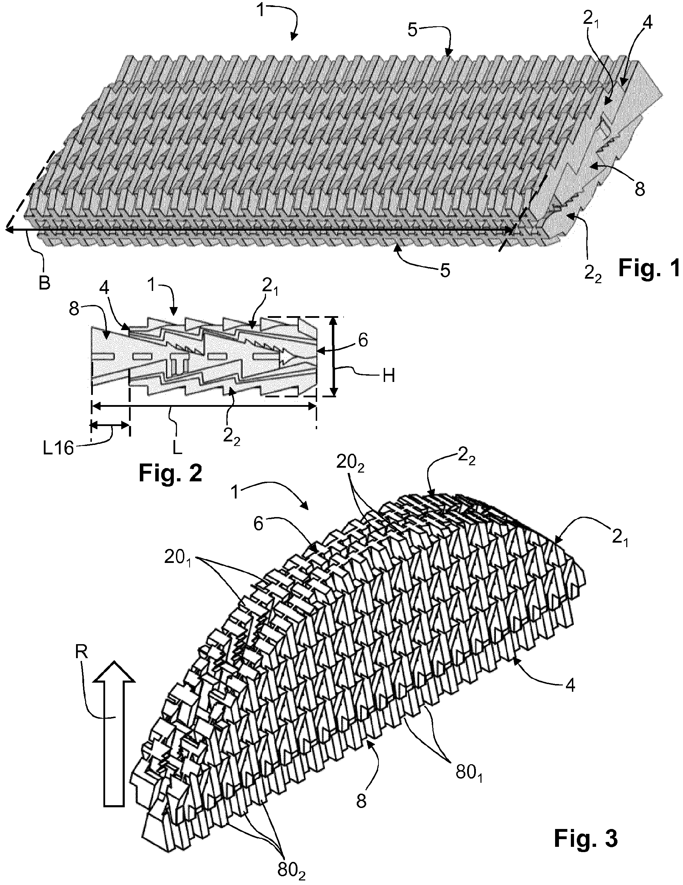

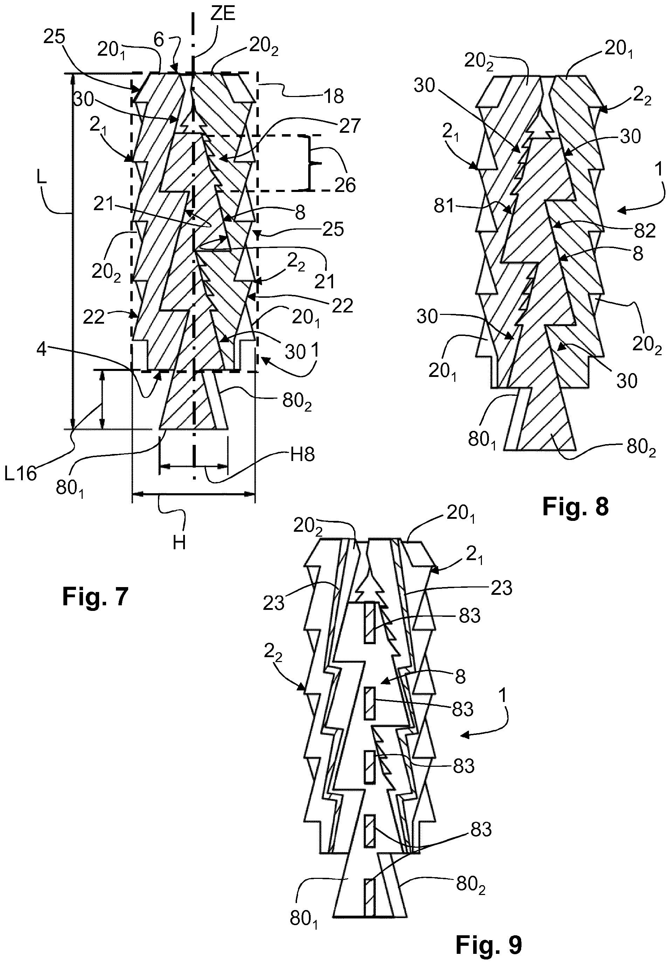

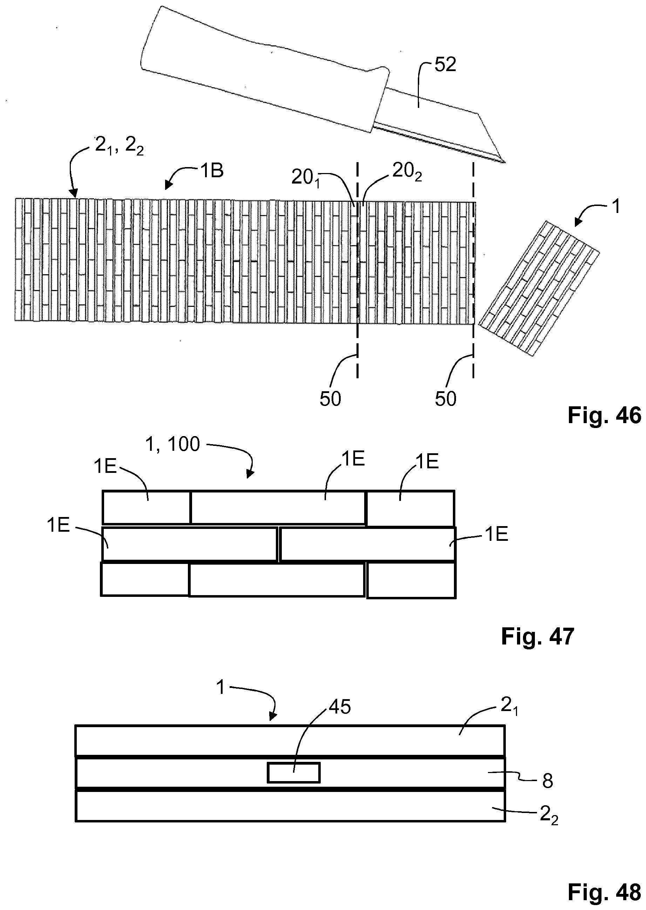

**Figur 1** zeigt eine perspektivische Ansicht einer möglichen Ausführungsform eines erfindungsgemäßen Flachdübels 1. Der Flachdübel 1 besteht aus einem ersten Element 2₁ und einem zweiten Element 2₂, die beide gegenüberliegend und voneinander beabstandet angeordnet sind.. Zwischen dem ersten Element 2₁ und dem zweiten Element 2₂, ist ein linear bewegliches Mittelteil 8 vorgesehen. Das erste Element 2₁, das zweite Element 2₂ und das Mittelteil 8 wirken form- und kraftschlüssig zusammen, wobei das Mittelteil 8 dennoch eine relative Beweglichkeit zwischen dem ersten Ende 4 und dem zweiten Ende 6 (siehe Fig. 2) der beiden Elemente 2₁, 2₂ besitzt.. Die voneinander beabstandeten Elemente 2₁, 2₂ und das Mittelteil 8 bilden somit eine Einheit. Dies hat den Vorteil, dass keine Teile des mehrteiligen Flachdübels 1 verloren gehen können. Ebenso erleichtert die Einheit die Montage des Flachdübels 1 in einem Schlitz (hier nicht dargestellt) in der Wand oder dem Material. In der hier dargestellten Ausführungsform hat die jeweilige äußere Seitenfläche 22 (siehe Fig. 7)der beiden voneinander beabstandeten Elemente 2₁, 2₂ eine Topologie 25 (siehe Fig. 7) ausgebildet, die für den Halt des Flachdübels 1 in der Mauer sorgt oder mit mehreren Flachdübeln 1 zu einem größeren Dübelsystem 100 (siehe Fig. 47) form- und kraftschlüssig verbunden werden kann.

**Figur 2** zeigt eine Seitenansicht der in Fig. 1 dargestellten Ausführungsform des erfindungsgemäßen Flachdübels 1. Der Flachdübel 1 ist in Fig. 1 und Fig. 2 in der nicht eingebauten Form dargestellt. Bei dem hier dargestellten, nicht montierten Zustand des Flachdübels 1 resultiert eine Gesamtlänge L, wobei das Mittelteil 8 mit einer Länge L16 das vordere Ende 4 der Elemente 20₁ und 20₂ überragt. Im nicht montierten Zustand besitzt der Flachdübel 1 eine Höhe H und eine Breite B (siehe Fig.1). Die in den Figuren 1 und 2 beschriebene Ausführungsform besitzt am ersten Ende 4 und am zweiten Ende 6 eine im Wesentlichen lineare Kontur 5 (siehe Fig. 1).

**Figur 3** zeigt eine perspektivische Ansicht einer weiteren möglichen Ausführungsform des Flachdübels 1 im nicht montierten Zustand, bei dem das Mittelteil 8 nicht vollkommen zwischen die beiden voneinander beabstandeten Elemente 2₁ und 2₂ eingeschoben ist. Die nachfolgende Beschreibung zu den Figuren 3 bis 35 bezieht sich auch auf die mögliche Ausführungsform des Flachdübels 1 mit einer im Wesentlichen linearen Kontur 5 am ersten Ende 4 und einer konvex geformten Kontur 7 am zweiten Ende 6. Die nachfolgend beschriebenen Wirkprinzipien der Elemente 2₁, 2₂ des Flachdübels bestehen analog bei der in den Figuren 1 und 2 beschriebenen Ausführungsform.

Das Mittelteil 8 (beider hier beschriebenen Ausführungsformen) umfasst eine Vielzahl von parallelen und stoffschlüssig miteinander verbundenen Elementen 80₁ und 80₂. Die Elemente 80₁ und 80₂ verlaufen zwischen dem ersten Ende 4 zum zweiten Ende 6 des Flachdübels 1. Jedes der beabstandeten Elemente 2₁ und 2₂ umfasst eine Vielzahl von parallelen Elementen 20₁ und 20₂, die sich ebenfalls zwischen dem ersten Ende 4 zum zweiten Ende 6 hin erstrecken. Die Elemente 80₁ und 80₂ des Mittelteils 8 und die Elemente 20₁ und 20₂ der beiden beabstandeten Elemente 2₁ und 2₂ wirken derart zusammen, dass sie gegenseitig eine lineare Führung von dem Mittelteil 8 zwischen den beiden beabstandeten Elementen 2₁ und 2₂ in Richtung R der Elemente 20₁ und 20₂ bzw. der Elemente 80₁ und 80₂ ermöglichen. Analog zu der in Fig. 1 beschriebenen Ausführungsform bilden das erste Element 2₁, das zweite Element 2₂ und das Mittelteil 8 eine Einheit, indem sie form- und kraftschlüssig zusammenwirken.

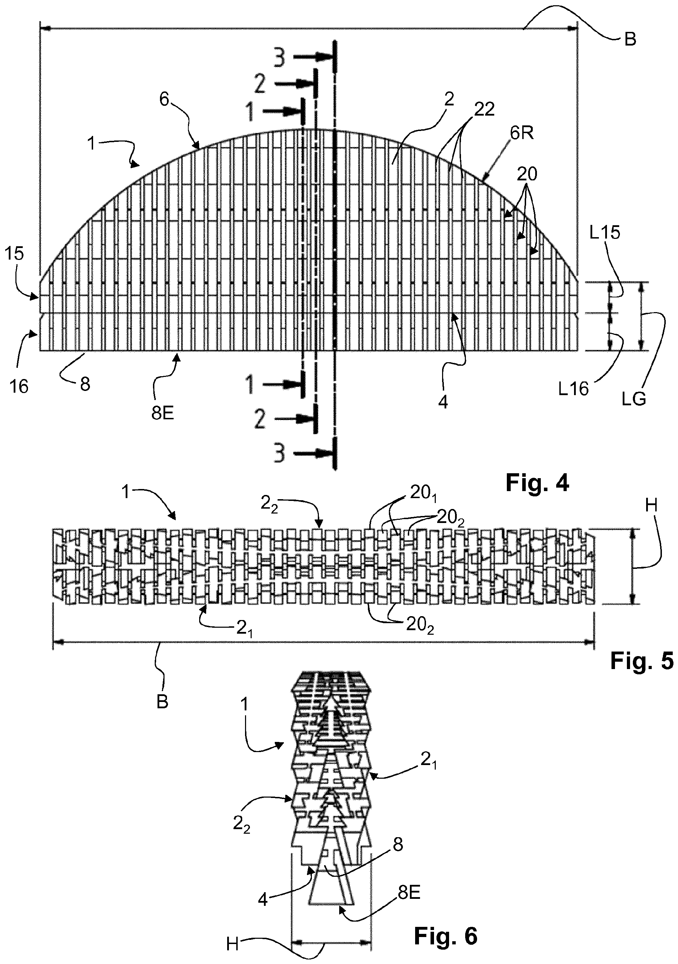

**Figur 4** zeigt eine Draufsicht auf die Ausführungsform des Flachdübels 1 aus Figur 3, bei der das Mittelteil 8 nicht zwischen die beiden beabstandeten Elemente 2₁ und 2₂ eingeschoben ist. Das Mittelteil 8 und die beiden beabstandeten Elemente 2₁ und 2₂ bilden eine Einheit. Der Flachdübel 1 kann somit als Einheit in einen in der Mauer ausgebildeten Schlitz (hier nicht dargestellt) eingesetzt werden. An dem ersten Ende 4 hat jedes der beabstandeten Elemente 2₁ und 2₂ eine im Wesentlichen lineare Kontur mit einer Breite B ausgebildet. An einem zweiten Ende 6 eines jeden Elements 2₁ und 2₂ ist eine konvex geformte Kontur ausgebildet, die bei dieser Ausführungsform ein Kreisbogen mit einem Radius 6R ist. Das Mittelteil 8 ist zum Teil zwischen die beiden beabstandeten Elemente 2₁ und 2₂ eingeschoben. Ein erstes Ende 8E des Mittelteils 8 überragt im nicht montierten Zustand das erste Ende 4 der beabstandeten Elemente 2₁ und 2₂. Aus Gründen der Stabilität und der Einfachheit der Herstellung des Flachdübels 1 hat jedes der beabstandeten Elemente 2₁ und 2₂ an den durch die Breite B beabstandeten Enden 15 eine lineare Kontur mit einer Länge L15 ausgebildet. Das Mittelteil 8 hat an den durch die Breite B beabstandeten Enden 16 ebenfalls eine lineare Kontur mit einer Länge L16 ausgebildet. Die lineare Kontur an den beabstandeten Enden 15 und 16 resultiert in einer Gesamtlänge LG. An jedem der beabstandeten Elemente 2₁ und 2₂ verlaufen die Elemente 20₁ und 20₂ parallel zueinander. In der hier gezeigten Ansicht ist jeweils die äußere Seitenfläche 22 der Elemente 20₁ und 20₂ zu sehen.

**Figur 5** ist eine Stirnansicht des Flachdübels 1 auf das zweite Ende 6 der Ausführungsform und gemäß dem Montagezustand aus Figur 4. Der Flachdübel 1 umfasst die beiden Elemente 2₁ und 2₂, die im nicht montierten Zustand zusammen mit dem Mittelteil 8 eine Höhe H besitzen. Jedes der Elemente 2₁ und 2₂ ist aus der Vielzahl von parallelen Elementen 20₁ und 20₂ aufgebaut.

**Figur 6** zeigt eine Seitenansicht des Flachdübels 1 der Ausführungsform aus Figur 4. Der Flachdübel 1 ist, wie bereits erwähnt, eine Einheit aus den beiden beabstandeten Elementen 2₁ und 2₂ und dem Mittelteil 8. Im nicht montierten Zustand besitzt die Einheit aus den beiden beabstandeten Elementen 2₁ und 2₂ und dem Mittelteil 8 eine Höhe H. Das erste Ende 8E des Mittelteils 8 überragt das erste Ende 4 der beabstandeten Elemente 2₁ und 2₂.

Die in **Figur 7** bis **Figur 9** gezeigten Schnittdarstellungen sind dahingehend zu interpretieren, dass schraffierte oder in Gänze schwarz dargestellte Flächen diejenigen Strukturelemente des Flachdübels 1 sind, durch die der Schnitt der unterschiedlichen Ansichten verläuft. Die lediglich als gefüllte Flächenelemente dargestellten Strukturelemente des Flachdübels 1 sind diejenigen, die hinter der Schnittebene sichtbar sind.. Ferner sei nochmals angemerkt, dass die Strukturelemente des Flachdübels 1 den Strukturelementen des Flachdübels 1 der in Figur 1 gezeigten Ausführungsform entsprechen.

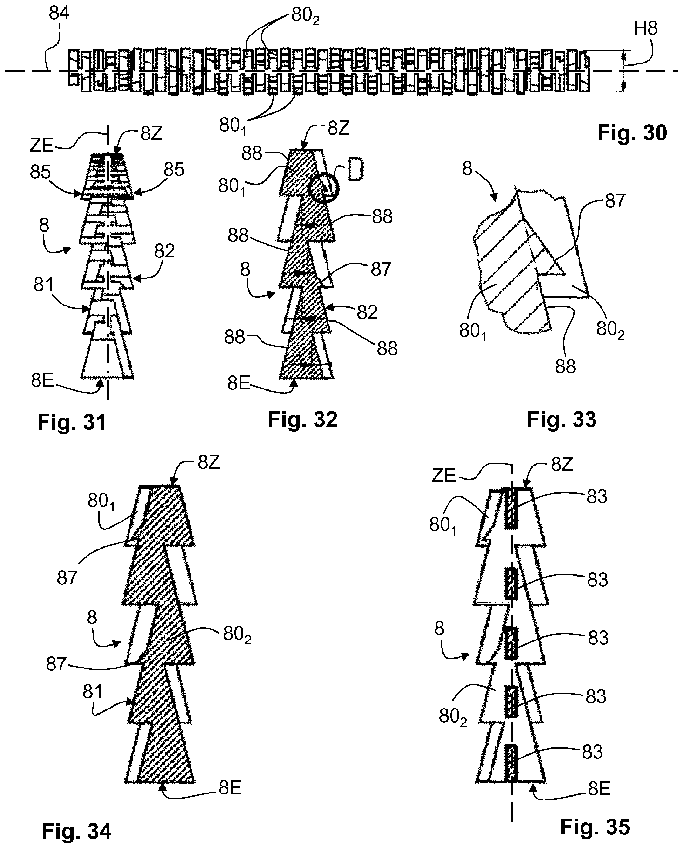

**Figur 7** stellt eine Schnittansicht des Flachdübels 1 der Ausführungsform aus Figur 4 entlang der in Figur 4 mit 1-1 gekennzeichneten Schnittlinie dar. Hier verläuft die Schnittlinie 1-1 durch jeweils ein Element 20₁ des ersten Elements 2₁ und ein Element 20₂ des zweiten Elements 2₂ und durch das erste Element 80₁ des Mittelteils 8. Die innere Seitenfläche 21 eines jeden der beiden Elemente 20₁ und 20₂ hat eine Topologie 25 ausgebildet, die eine Vielzahl von Abschrägungen 30 aufweist, die in Richtung auf das zweite Ende 6 und in Richtung auf eine zentrale Ebenen ZE des Flachdübels 1 hin verlaufen. Die Topologie 25 der inneren Seitenfläche 21 des Elements 20₂ des zweiten Elements 2₂ hat ferner noch in einem Bereich 26 der mindestens einen Abschrägung 30 eine Raststruktur 27 ausgebildet, die mit mindestens einem Rastelement 87 (siehe Figur 33) des Elements 80₁ des Mittelteils 8 formschlüssig zusammenwirkt.

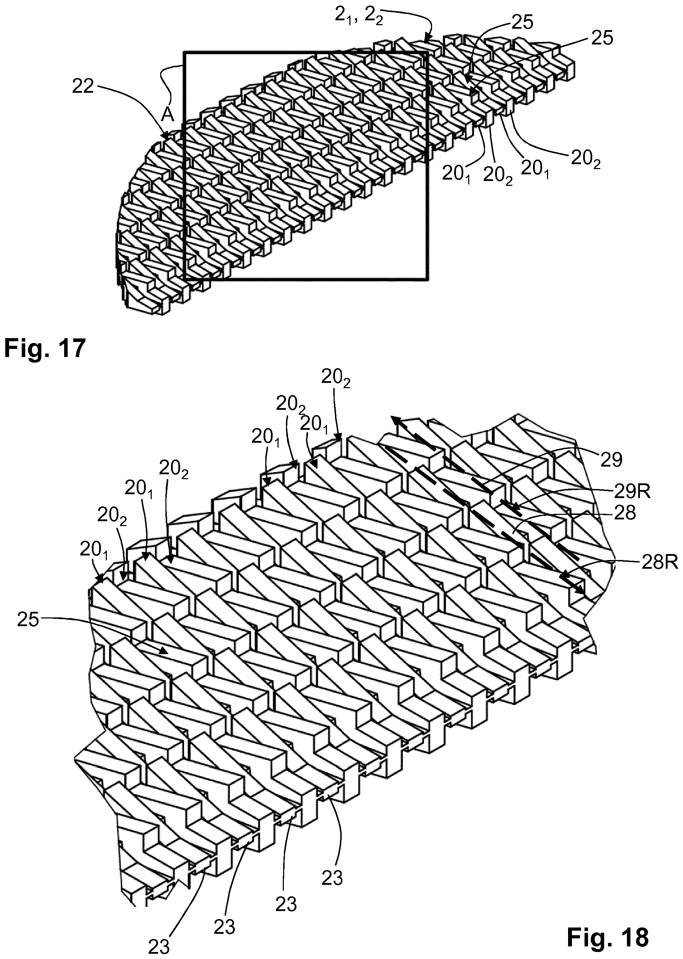

Die Topologie 25 der äußeren Seitenflächen 22 der Elemente 20₁ und der Elemente 20₂ sind unterschiedlich ausgebildet. Bei der in Figur 7 gezeigten möglichen Ausführungsform umfasst die Seitenfläche 22 der Elemente 20₁ eine Vielzahl von Abschrägungen 28 (siehe Figur 18), die in Richtung auf das zweite Ende 6 und in Richtung auf die zentrale Ebene ZE des Flachdübels 1 hin verlaufen. Die Seitenfläche 22 der Elemente 20₂ umfasst eine Vielzahl von Abschrägungen 29 (siehe Figur 18), die in Richtung auf das erste Ende 4 und in Richtung auf die zentrale Ebene ZE des Flachdübels 1 hin verlaufen. Hinter dem Element 20₁ des ersten Elements 2₁ ist das Element 20₂ und dessen Ausgestaltung der äußeren Seitenfläche 22 zu erkennen. Ebenso sind hinter dem Element 20₂ des zweiten Elements 2₂ das Element 20₁ und dessen Ausgestaltung der äußeren Seitenfläche 22 zu erkennen. Die äußeren Seitenflächen 22 der Elemente 20₁ und 20₂ sind derart gestaltet, dass deren Einhüllende 18 ein Rechteck ist. Hinter dem Element 80₁ des Mittelteils 8 ist das Element 80₂ des Mittelteils 8 zu erkennen.

Bei dem hier dargestellten, nicht montierten Zustand des Flachdübels 1 resultiert eine Gesamtlänge L, wobei das Mittelteil 8 mit einer Länge L16 das vordere Ende 4 der Elemente 20₁ und 20₂ überragt. Die beiden Elemente 80₁ und 80₂ des Mittelteils 8 haben eine Gesamthöhe H8.

**Figur 8** stellt eine Schnittansicht des Flachdübels 1 der Ausführungsform aus Figur 4 entlang der in Figur 4 mit 2-2 gekennzeichneten Schnittlinie dar. Hier verläuft die Schnittlinie 2-2 durch jeweils ein Element 20₂ des ersten Elements 2₁ und ein Element 20₁ des zweiten Elements 2₂ und durch das zweite Element 80₂ des Mittelteils 8. Hinter dem Element 20₂ des ersten Elements 2₁ ist das Element 20₁ zu erkennen. Ebenso ist hinter dem Element 20₁ des zweiten Elements 2₂ das Element 20₂ zu erkennen. Hinter dem Element 80₂ des Mittelteils 8 ist das Element 80₁ des Mittelteils 8 zu erkennen. Die ersten Seitenflächen 81 des Elements 80₁ des Mittelteils 8 und die zweiten Seitenflächen 82 des Elements 80₂ des Mittelteils 8 wirken formschlüssig mit den inneren Seitenflächen 21 (siehe Figur 7) des ersten Elements 20₁ und des zweiten Elements 20₂ des ersten Elements 2₁ und des zweiten Elements 2₂ zusammen.

**Figur 9** stellt eine Schnittansicht des Flachdübels 1 der Ausführungsform aus Figur 4 entlang der in Figur 4 mit 3-3 gekennzeichneten Schnittlinie dar. Bei der hier dargestellten Ausführungsform sind die ersten Elemente 20₁ und die zweiten Elemente 20₂ des ersten Elements 2₁ und des zweiten Elements 2₂ voneinander beabstandet. Die Schnittlinie 3-3 verläuft dabei durch die mindestens eine Materialbrücke 83 des Mittelteils 8 und durch die Materialbrücke 23 des ersten Elements 2₁ und des zweiten Elements 2₂. Bei der Ausführungsform der Figur 9 sind die ersten Elemente 20₁ und die zweiten Elemente 20₂ des ersten Elements 2₁ bzw. des zweiten Elements 2₂ über eine einzige Materialbrücke 23 miteinander verbunden. Die beiden Elemente 80₁ und 80₂ des Mittelteils 8 sind untereinander mit einer Vielzahl von Materialbrücken 83 miteinander verbunden. Es ist für einen Fachmann selbstverständlich, dass dies lediglich ein Beispiel von mehreren ist und nicht als eine Beschränkung der Erfindung aufgefasst werden soll.

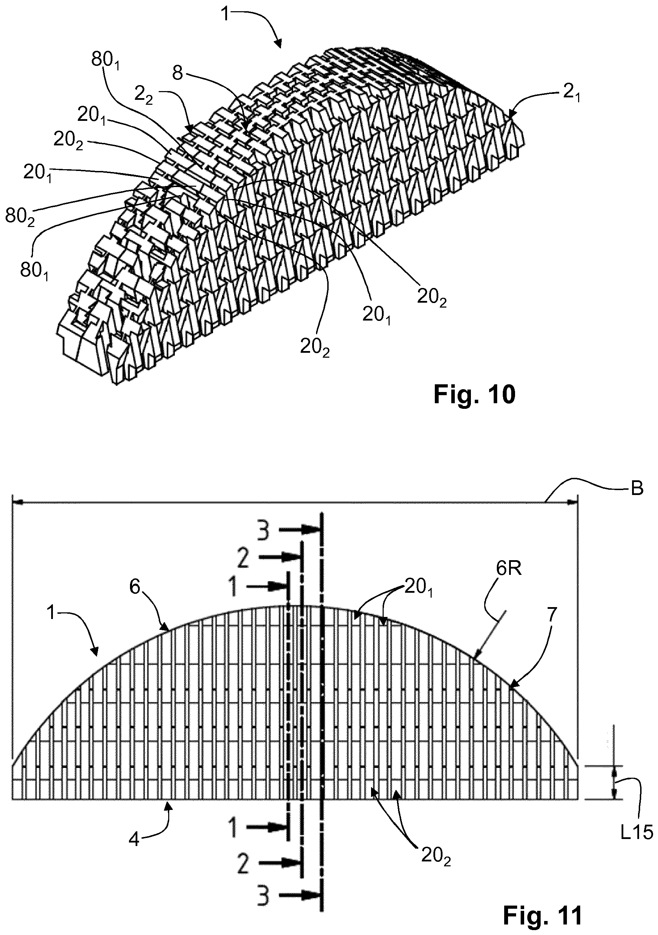

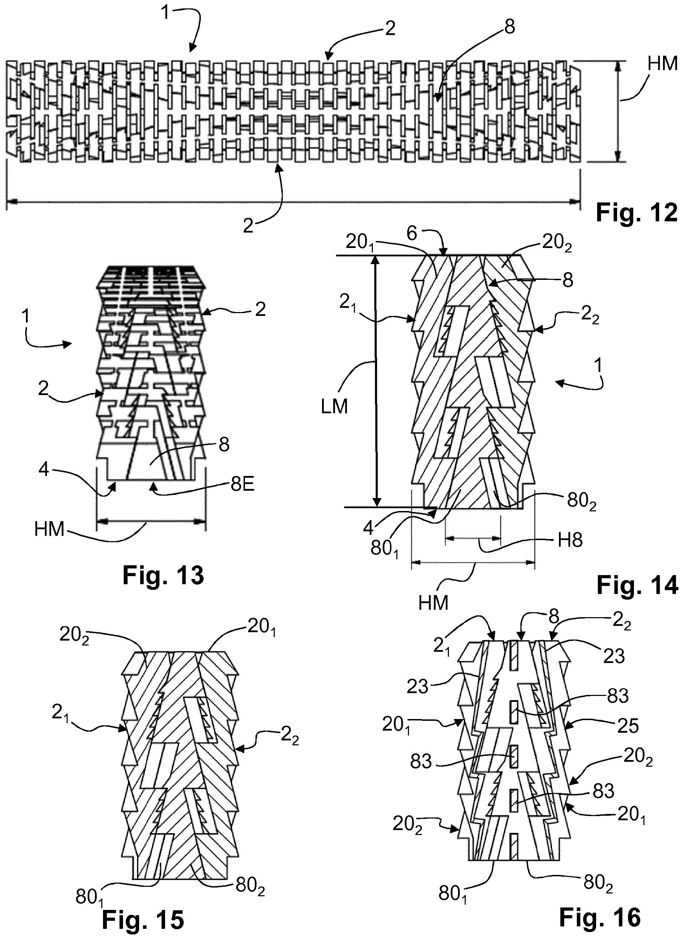

**Figur 10** zeigt eine perspektivische Ansicht der Ausführungsform des Flachdübels 1, der Ausführungsform aus Figur 3, wobei das Mittelteil 8 vollständig zwischen die voneinander beabstandeten Elemente 2₁, 2₂ eingeschoben ist. In diesem Montagezustand ist der Flachdübel 1 vollständig in einem Schlitz (nicht dargestellt) in einer Mauer befestigt. Das zweite Ende 8Z (siehe Figur 12) des Mittelteils 8 fluchtet dabei im Wesentlichen mit dem zweiten Ende 6 der voneinander beabstandeten Elemente 2.

In dieser Darstellung ist sehr schön zu erkennen, dass die Elemente 20₁ und 20₂ der voneinander beabstandeten Elemente 2_{1,} 2₂, pro Element 2_{1,} 2₂ jeweils parallel und abwechselnd voneinander angeordnet sind. Ebenso sind die Elemente 80₁ und 80₂ des Mittelteils 8 abwechselnd voneinander angeordnet. So wirkt z.B. ein Element 20₁ eines der beabstandeten Elemente 2₁ mit einem ersten Element 80₁ des Mittelteils 8 zusammen, und das erste Element 80₁ des Mittelteils 8 wirkt mit einem Element 20₂ des anderen Elements 2₂ zusammen. Bei dem darauffolgenden Satz, wirkt z.B. das Element 20₂ eines der beabstandeten Elemente 2₂ mit dem zweiten Element 80₂ des Mittelteils 8 zusammen, und das zweite Element 80₂ des Mittelteils 8 wirkt mit dem ersten Element 20₁ des anderen Elements 2₁ zusammen. Diese Abfolge setzt sich bei der hier dargestellten Ausführungsform über die gesamte Breite B (siehe Figur 11) des Flachdübels 1 fort.

**Figur 11** zeigt eine Draufsicht auf die Ausführungsform des Flachdübels 1 aus Figur 3. Hier ist das Mittelteil 8 vollkommen eingeschoben und somit in dieser Darstellung nicht zu sehen. Der Flachdübel 1 ist in der Mauer geklemmt. Wie bereits vorstehend erwähnt, umfasst jedes der beabstandeten Elemente 2_{1,} 2₂ eine Vielzahl von parallelen Elementen 20_{1,} 20₂. Die Elemente 20_{1,} 20₂ verlaufen zwischen dem ersten Ende 4 zum zweiten Ende 6 des Flachdübels 1. Am ersten Ende 4 hat der montierte Flachdübel 1 die im Wesentlichen lineare Kontur mit einer Breite B ausgebildet. An einem zweiten Ende 6 hat der montierte Flachdübel 1 die konvex geformte Kontur 7 ausgebildet, die bei dieser Ausführungsform ein Kreisbogen mit einem Radius 6R ist.

**Figur 12** zeigt eine Stirnansicht des montierten Zustands des Flachdübels 1 aus Figur 11. Der Flachdübel 1 umfasst die beiden Elemente 2₁ und 2₂, die nun im nicht montierten Zustand zusammen mit dem Mittelteil 8 eine Höhe HM besitzen. Die Höhe HM ist größer als die Höhe H des Flachdübels 1 im nicht montierten Zustand. Durch die Zunahme der Höhe wird eine wirkungsvolle Klemmung des Flachdübels 1 in der Mauer (nicht dargestellt) erreicht.

**Figur 13** zeigt eine Seitenansicht des montierten Zustands des Flachdübels 1 aus Figur 11. Der Flachdübel 1 ist, wie bereits erwähnt, eine Einheit aus den beiden beabstandeten Elementen 2₁ und 2₂ und dem Mittelteil 8. Im montierten Zustand besitzt die Einheit aus den beiden beabstandeten Elementen 2₁ und 2₂ und dem Mittelteil 8 einen Höhe HM, die dadurch erreicht wird, dass das Mittelteil 8 vollkommen zwischen die beiden beabstandeten Elemente 2₁ und 2₂ eingeschoben ist. Das erste Ende 8E des Mittelteils 8 fluchtet idealerweise dann mit dem ersten Ende 4 der beabstandeten Elemente 2₁ und 2₂.

**Figur 14** zeigt eine Schnittansicht des Flachdübels 1 entlang der in Figur 11 mit 1-1 gekennzeichneten Schnittlinie. Analog zur Darstellung der Figur 7 verläuft die Schnittlinie 1-1 durch jeweils ein Element 20₁ des ersten Elements 2₁ und ein Element 20₂ des zweiten Elements 2₂ und durch das erste Element 80₁ des Mittelteils 8. Die Topologie 25 der inneren Seitenfläche 21 eines jeden der beiden Elemente 20₁ und 20₂ wirkt mit der Topologie 85 (siehe Fig. 31) des Elements 80₁ des Mittelteils 8 formschlüssig zusammen. Wenn das Mittelteil 8 mit dem ersten Ende 4 und dem zweiten Ende 6 des Flachdübels 1 fluchtet, hat der Flachdübel 1 eine Höhe HM, die größer ist als die Höhe H des nicht montierten Flachdübels 1 (siehe Fig. 7). Ferner hat der Flachdübel 1 dann eine Länge LM, die kleiner ist als die Länge L des nicht montierten Flachdübels 1.

**Figur 15** zeigt eine Schnittansicht des Flachdübels 1 entlang der in Figur 11 mit 2-2 gekennzeichneten Schnittlinie. Analog zur Darstellung aus Figur 8 verläuft die Schnittlinie 2-2 durch jeweils ein Element 20₂ des ersten Elements 2₁ und ein Element 20₁ des zweiten Elements 2₂ und durch das zweite Element 80₂ des Mittelteils 8. Das Zusammenwirken der Elemente 20₁ und 20₂ des ersten Elements 2₁ und des zweiten Elements 20₂ mit den Elementen 80₁ und den Elementen 80₂ des Mittelteils 8 ist in Figur 8 hinreichend beschrieben und braucht hier nicht noch einmal wiederholt werden.

**Figur 16** zeigt eine Schnittansicht des Flachdübels entlang der in Figur 11 mit 3-3 gekennzeichneten Schnittlinie. Analog zur Darstellung aus Figur 9 sind die ersten Elemente 20₁ und die zweiten Elemente 20₂ des ersten Elements 2₁ und des zweiten Elements 2₂ voneinander beabstandet. Die Schnittlinie 3-3 verläuft dabei durch die mindestens eine Materialbrücke 83 des Mittelteils 8 und durch die Materialbrücke 23 des ersten Elements 2₁ und des zweiten Elements 2₂. Hier ist sehr schön zu sehen, dass die beiden Elemente 80₁ und 80₂ des Mittelteils 8 wechselseitig in Formschluss mit dem ersten Element 20₁ und dem zweiten Element 20₂ des ersten Elements 2₁ und dem ersten Element 20₁ und dem zweiten Element 20₂ des zweiten Elements 2₂ sind.

**Figur 17** zeigt eine perspektivische Ansicht einer äußeren Seitenfläche 22 eines der beabstandeten Elemente 2₁ bzw. 2₂ des Flachdübels1. Wie vorstehend erwähnt, ist jedes der beabstandeten Elemente 2₁ oder 2₂ des Flachdübels1 derart aufgebaut, dass es aus einer Abfolge von parallel zueinander angeordneten Elementen 20₁ und 20₂ besteht. Jedes der Elemente 20₁ und 20₂ besitzt eine äußere Seitenfläche 22, die sich jeweils hinsichtlich ihrer Topologie 25 unterscheiden.

**Figur 18** zeigt eine vergrößerte Darstellung des in Figur 17 mit A gekennzeichneten Bereichs. Die Elemente 20₁ und 20₂ sind zueinander parallel und derart angeordnet, dass auf ein Element 20₁ ein Element 20₂, auf das Element 20₂ ein Element 20₁ und auf das Element 20₁ wieder ein Element 20₂ folgt. Mit diesem Muster sind das erste beabstandete Element 2₁ und das zweite beabstandete Element 2₂ aufgebaut. Auch bei dieser Ausführungsform sind die Elemente 20₁ und 20₂ über Materialbrücken 23 miteinander verbunden. Die äußere Seitenfläche 22 der Elemente 20₁ hat eine Topologie 25 ausgebildet, die aus mindestens einer Abschrägung 28 besteht, die in eine erste Richtung 28R geneigt ist. Die äußere Seitenfläche 22 der Elemente 20₂ hat eine Topologie 25 ausgebildet, die aus mindestens einer Abschrägung 29 besteht, die in eine zweite Richtung 29R geneigt ist. Die erste Richtung 28R und die zweite Richtung 29R sind einander entgegengesetzt.

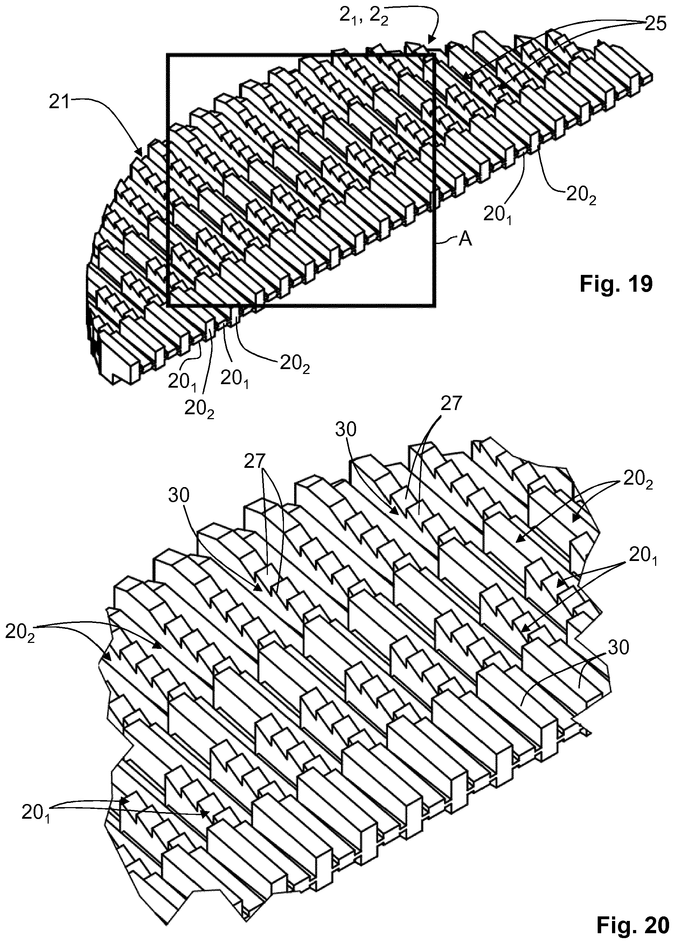

**Figur 19** zeigt eine perspektivische Ansicht einer inneren Seitenfläche 21 eines der beabstandeten Elemente 2₁ bzw. 2₂ des Flachdübels 1. Wie vorstehend erwähnt, ist jedes der beabstandeten Elemente 2₁ oder 2₂ des Flachdübels1 derart aufgebaut, dass es aus einer Abfolge von parallel zueinander angeordneten Elementen 20₁ und 20₂ besteht. Jedes der Elementen 20₁ und 20₂ besitzt eine innere Seitenfläche 21, die sich jeweils hinsichtlich ihrer Topologie 25 unterscheiden.

**Figur 20** zeigt eine vergrößerte Darstellung des in Figur 19 mit A gekennzeichneten Bereichs. Die Elemente 20₁ und 20₂ sind zueinander parallel und derart angeordnet, dass auf ein Element 20₁ ein Element 20₂, auf das Element 20₂ ein Element 20₁ und auf das Element 20₁ wieder ein Element 20₂ folgt. Die innere Seitenfläche 21 der Elemente 20₁ hat eine Topologie 25 ausgebildet, die aus mindestens einer Abschrägung 30 besteht, die zumindest zum Teil eine Raststruktur 27 ausgeformt hat. Die innere Seitenfläche 21 der Elemente 20₂ hat eine Topologie 25 ausgebildet, die aus mindestens einer Abschrägung 30 gebildet ist.

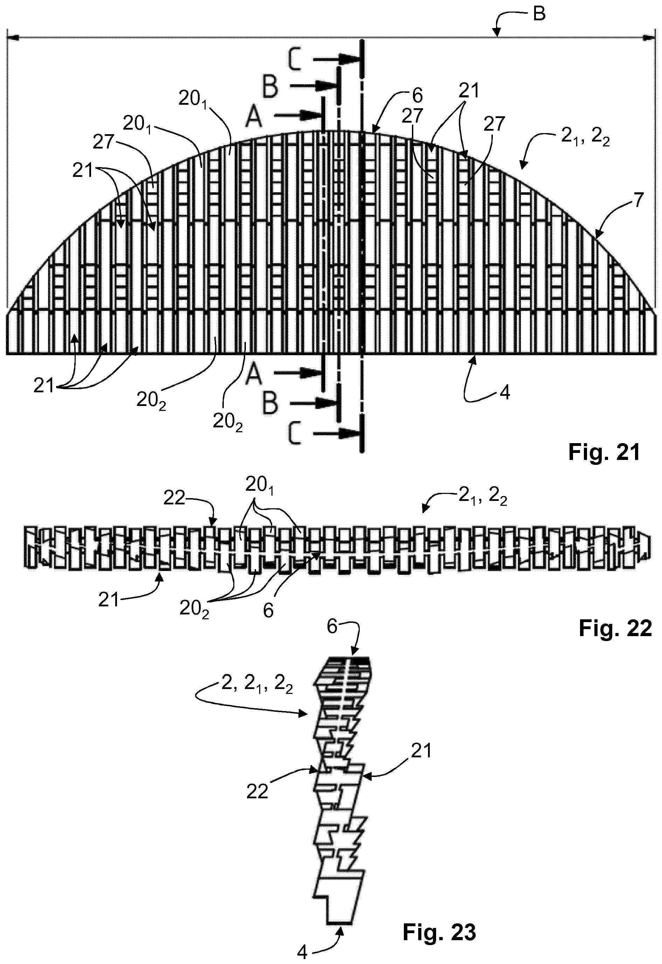

**Figur 21** zeigt eine Draufsicht auf die Ausführungsform der inneren Seitenfläche 21 eines der beabstandeten Elemente 2₁ bzw. 2₂ des Flachdübels 1 aus Figur 19. Wie bereits vorstehend erwähnt, umfasst jedes der beabstandeten Elemente 2₁ bzw. 2₂ eine Vielzahl von abwechselnd angeordneten, parallelen Elementen 20₁ und 20₂. Am ersten Ende 4 haben die beabstandeten Elemente 2₁ bzw. 2₂ eine lineare Kontur mit einer Breite B ausgebildet. An einem zweiten Ende 6 haben die beabstandeten Elemente 2₁ bzw. 2₂ die konvex geformte Kontur 7 ausgebildet. Die Elemente 20₂ haben mindestens eine Raststruktur 27 an der inneren Seitenfläche 21 ausgebildet.

**Figur 22** zeigt eine Stirnansicht eines der beabstandeten Elemente 2₁ bzw. 2₂ des Flachdübels 1 aus Figur 21, wobei der Blick auf das zweite Ende 6 gerichtet ist. Die innere Seitenfläche 21 und die äußere Seitenfläche 22 verlaufen senkrecht zur Zeichenebene. Wie bereits schon mehrfach erwähnt, sind die Elemente 20₁ und 20₂ parallel zueinander angeordnet und wechseln sich ab. Auf ein Element 20₁ folgt ein Element 20₂ und so weiter.

**Figur 23** zeigt eine Seitenansicht eines der beabstandeten Elemente 2₁ bzw. 2₂ des Flachdübels 1 aus Figur 21. Die innere Seitenfläche 21 und die äußere Seitenfläche 22 erstrecken sich vom ersten Ende 4 zum zweiten Ende 6 hin. Wie aus Figur 21 ersichtlich ist, hat das zweite Ende 6 die Form eines Kreisbogens, der an einer Basis eines Schlitzes in der Mauer anliegt (hier nicht dargestellt).

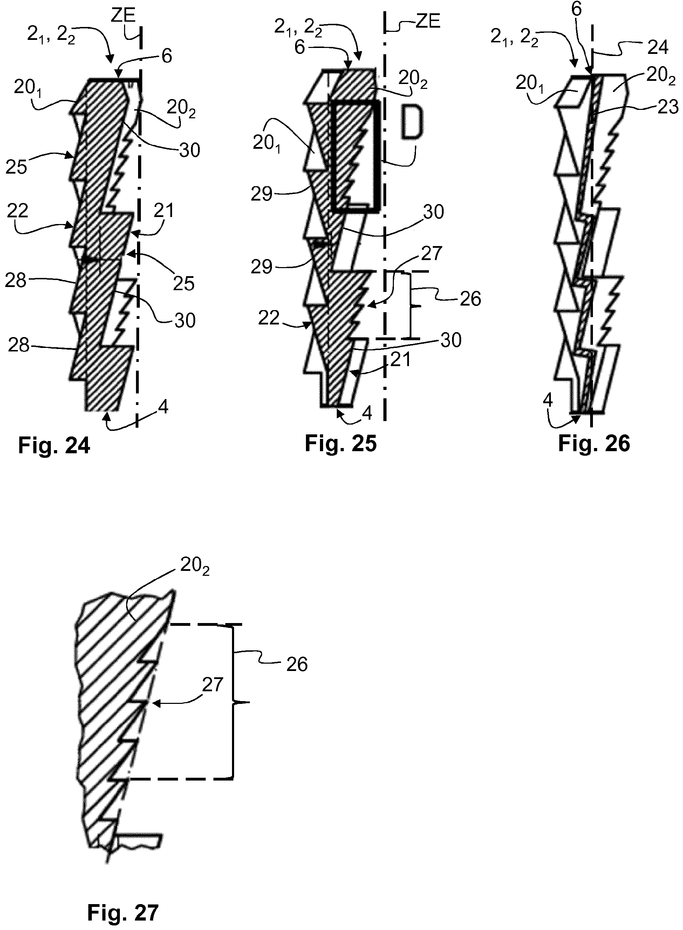

**Figur 24** zeigt eine Schnittansicht eines der beabstandeten Elemente 2_{1,} 2₂ des Flachdübels 1 entlang der in Figur 21 mit A-A gekennzeichneten Schnittlinie. Hier verläuft die Schnittlinie A-A durch jeweils ein Element 20₁ des Elements 2₁ bzw. 2₂. Die innere Seitenfläche 21 des Elements 20₁ hat eine Topologie 25 ausgebildet, die eine Vielzahl von Abschrägungen 30 aufweist, die in Richtung auf das zweite Ende 6 und in Richtung auf die zentrale Ebene ZE hin verlaufen. Die Topologie 25 der äußeren Seitenfläche 22 des Elements 20₁ besitzt ebenfalls mehrere Abschrägungen 28, die in Richtung auf das zweite Ende 6 und in Richtung auf die zentrale Ebene ZE hin verlaufen. Hinter dem Element 20₁ ist das nicht geschnittene Element 20₂ zu erkennen.

**Figur 25** zeigt eine Schnittansicht eines der beabstandeten Elemente 2_{1,} 2₂ des Flachdübels 1 entlang der in Figur 21 mit B-B gekennzeichneten Schnittlinie. Die Topologie 25 der inneren Seitenfläche 21 des Elements 20₂ hat ebenfalls mindestens eine Abschrägung 30 ausgebildet, die in einem Bereich 26 der mindestens einen Abschrägung 30 eine Raststruktur 27 ausgebildet hat. Die mindestens eine Abschrägung 30 der inneren Seitenfläche 21 des Elements 20₂ verläuft ebenfalls in Richtung auf das zweite Ende 6 und in Richtung auf die zentrale Ebenen ZE hin. Die Topologie 25 der äußeren Seitenfläche 22 des Elements 20₂ besitzt ebenfalls mehrere Abschrägungen 29, die in Richtung auf das erste Ende 4 und in Richtung auf die zentrale Ebenen ZE hin verlaufen.

**Figur 26** zeigt eine Schnittansicht eines der beabstandeten Elemente 2_{1,} 2₂ des Flachdübels 1 entlang der in Figur 21 mit C-C gekennzeichneten Schnittlinie. Wie bereits vorstehend beschrieben, sind die ersten Elemente 20₁ und die zweiten Elemente 20₂ des ersten Elements 2₁ voneinander beabstandet. Die Schnittlinie C-C verläuft dabei durch die Materialbrücke 23 des Elements 2₁ bzw. 2₂. In der hier dargestellten Ausführungsform verläuft die Materialbrücke 23 vom ersten Ende 4 zum zweiten Ende 6.

**Figur 27** zeigt eine vergrößerte Darstellung des in Figur 25 mit D gekennzeichneten Bereichs. Wie bereits in der Beschreibung zu den Figuren 7, 20 und 25 erwähnt, hat mindesten eine Abschrägung 30 des Elements 20₂ in einem Bereich 26 eine Raststruktur 27 ausgebildet. Die Raststruktur 27 wirkt formschlüssig mit mindestens einem Rastelement 87 (siehe Figur 33) des Elements 80₁ des Mittelteils 8 zusammen.

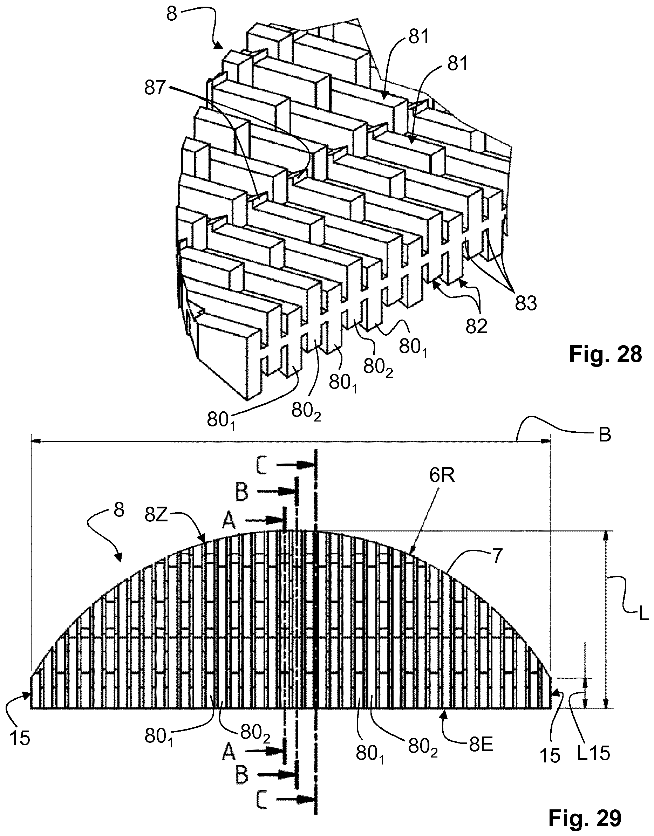

**Figur 28** zeigt eine perspektivische Teilansicht einer Ausführungsform des Mittelteils 8 des Flachdübels 1. Die Elemente 80₁ und 80₂ des Mittelteils 8 sind abwechselnd parallel zueinander angeordnet. Über mindestens eine Materialbrücke 83 sind die Elemente 80₁ und 80₂ stoffschlüssig miteinander verbunden. Die Elemente 80₁ und 80₂ haben jeweils eine erste Seitenfläche 81 und eine zweite Seitenfläche 82 ausgebildet.

**Figur 29** zeigt eine Draufsicht auf eine mögliche Ausführungsform des Mittelteils 8. Wie bereits vorstehend erwähnt, besteht das Mittelteil 8 aus einer Abfolge von Elementen 80₁ und Elementen 80₂, die parallel zueinander angeordnet sind und von einem ersten Ende 8E zu einem zweites Ende 8Z des Mittelteils 8 verlaufen. Das Mittelteil 8 hat eine Breite B zwischen den beabstandeten Enden 15. An jedem Ende 15 ist ebenfalls eine lineare Kontur mit der Länge L15 ausgebildet. Das Mittelteil 8 besitzt eine Länge L und die konvex geformte Kontur 7 besitzt einen Radius 6R.

**Figur 30** zeigt eine Stirnansicht des Mittelteils 8 des Flachdübels 1 aus Figur 29. Die Blickrichtung ist auf das zweite Ende 8Z des Mittelteils 8. Die Elemente 80₁ und 80₂ stehen senkrecht von einer Ebene 84 ab. Die Elemente 80₁ und 80₂ sind abwechselnd angeordnet.

**Figur 31** zeigt eine Seitenansicht des Mittelteils 8 des Flachdübels 1 aus Figur 29. Es ist zu erkennen, dass die erste Seitenfläche 81 und die zweite Seitenfläche 82 des Mittelteils 8 jeweils eine derartige Topologie 85 ausgebildet haben, dass in der Seitenansicht beide Seitenflächen 81 und 82 eine Vielzahl von Abschrägungen 88 (siehe Figur 32) ausgebildet haben. Die Abschrägungen 88 der ersten Seitenfläche 81 und die Abschrägungen 88 der zweiten Seitenfläche 82 sind in Richtung auf das zweite Ende 8Z und in Richtung auf die zentrale Ebene ZE hin geneigt.

**Figur 32** zeigt eine Schnittansicht des Mittelteils 8 entlang der in Figur 29 mit A-A gekennzeichneten Schnittlinie. Hier verläuft die Schnittlinie A-A durch ein Element 80₁ des Mittelteils 8. Mindestens eine Abschrägung 88 der zweiten Seitenfläche 82 des Elements 80₁ des Mittelteils 8 hat ein Rastelement 87 ausgebildet. In der hier dargestellten Ausführungsform haben die Abschrägungen 88 von dem zweiten Ende 8Z jeweils ein Rastelement 87 ausgebildet.

**Figur 33** zeigt eine vergrößerte Darstellung des in Figur 32 mit D gekennzeichneten Bereichs. Hinter dem Element 80₁ des Mittelteils 8 ist das ist nicht geschnittene Element 80₂ des Mittelteils 8 zu erkennen. Das Rastelement 87 einer Abschrägung 88 des Elements 80₁ des Mittelteils 8 hat eine Neigung ausgebildet, die der Neigung der Abschrägung 88 entgegengesetzt ist. Das Rastelement 87 bzw. die an den Elementen 80₁ und 80₂ des Mittelteils 8 vorgesehenen Rastelemente 87 verhindern ein Zurückrutschen des Mittelteils 8, wenn dieses zwischen die beiden beabstandeten Elemente 2₁ und 2₂ (siehe Figur 14) eingeschoben ist.

**Figur 34** zeigt eine Schnittansicht des Mittelteils 8 entlang der in Figur 29 mit B-B gekennzeichneten Schnittlinie. Hier verläuft die Schnittlinie B-B durch ein Element 80₂ des Mittelteils 8. Mindestens eine Abschrägung 88 der ersten Seitenfläche 81 des Elements 80₂ des Mittelteils 8 hat ein Rastelement 87 ausgebildet. In der hier dargestellten Ausführungsform haben die Abschrägungen 88 vor dem zweiten Ende 8Z jeweils ein Rastelement 87 ausgebildet.

**Figur 35** zeigt eine Schnittansicht des Mittelteils 8 entlang der in Figur 29 mit C-C gekennzeichneten Schnittlinie. Die Elemente 80₁ und die Elemente 80₂ des Mittelteils 8 sind voneinander beabstandet. Die Schnittlinie C-C verläuft dabei durch die mindestens eine Materialbrücke 83 des Mittelteils 8. In der hier dargestellten Ausführungsform sind mehrere voneinander separierte Materialbrücken 83 vorgesehen, die sich vom ersten Ende 8E zum zweiten Ende 8Z des Mittelteils 8 erstrecken. Die Materialbrücken 83 sind in der zentralen Ebene ZE angeordnet.

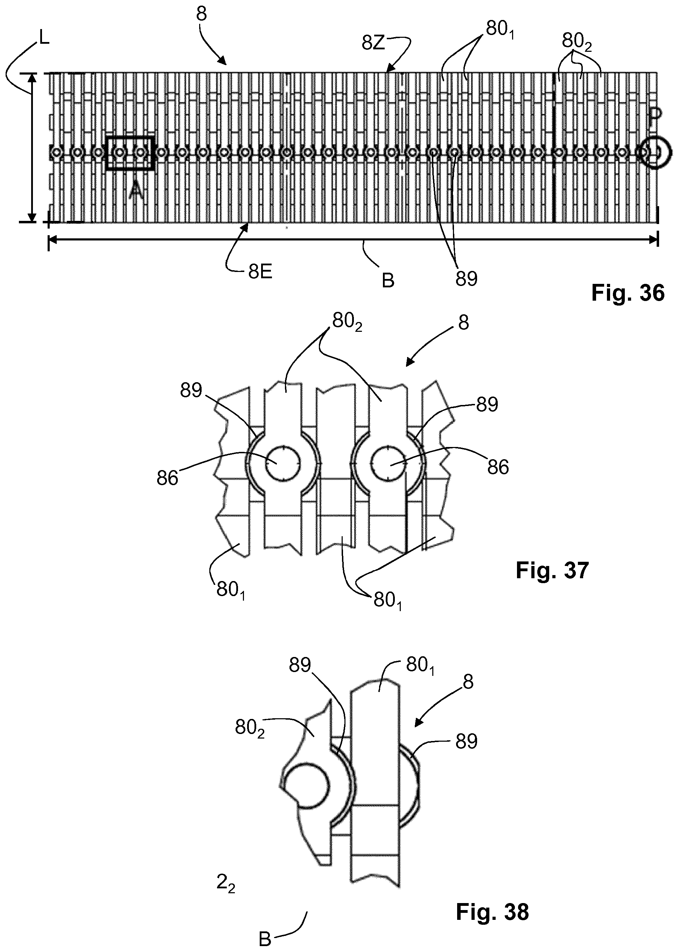

**Figur 36** zeigt eine Draufsicht auf eine mögliche Ausführungsform des Mittelteils 8 für den Flachdübel 1 aus Figur 1. An dem ersten Ende 8E hat das Mittelteil 8 eine im Wesentlichen lineare Kontur 5 mit der Breite B ausgebildet. An einem zweiten Ende 8Z hat das Mittelteil 8 ebenfalls eine lineare Kontur 5 mit der Breite B ausgebildet. Das Mittelteil 8 besitzt eine Länge L. Ferner umfasst das Mittelteil 8 mehrere Elemente 80₁ und 80₂ die zwischen dem ersten Ende 8E und dem zweiten Ende 8Z des Mittelteils 8 verlaufen und parallel zueinander sind. Ferner trägt das Mittelteil 8 mehrere Sicherungselemente 89, die zusätzlich für die form- und kraftschlüssige Verbindung zwischen dem Mittelteil 8 und den beiden Elementen 2₁ und 2₂ sorgen.

**Figur 37** zeigt eine Detailansicht des in Figur 36 mit A gekennzeichneten Bereichs. Die Sicherungselemente 89 wirken mit den Elementen 20₁ oder 20₂ der Elemente 2₁ und 2₂ zusammen, die beidseitig des Mittelteils 8 angebracht werden. Die Sicherungselemente 89 sind elastisch deformierbar und wirken somit kraftschlüssig mit den Elementen 20₁ oder 20₂ der Elemente 2₁ und 2₂ zusammen. Jedes Sicherungselement 89 kann mit einer zentralen Freisparung 86 ausgebildet sein, um die Deformierbarkeit der Sicherungselemente 89 zu erleichtern. Somit ist sichergestellt, dass der Flachdübel 1 aus den beabstandeten Elementen 2₁ und 2₂ und dem Mitteilteil 8 eine Einheit bildet.

**Figur 38** zeigt eine Detailansicht des in Figur 36 mit P gekennzeichneten Bereichs. Diese Darstellung verdeutlicht, dass die Sicherungselemente 89 beidseitig des Mittelteils 8 ausgebildet sind.

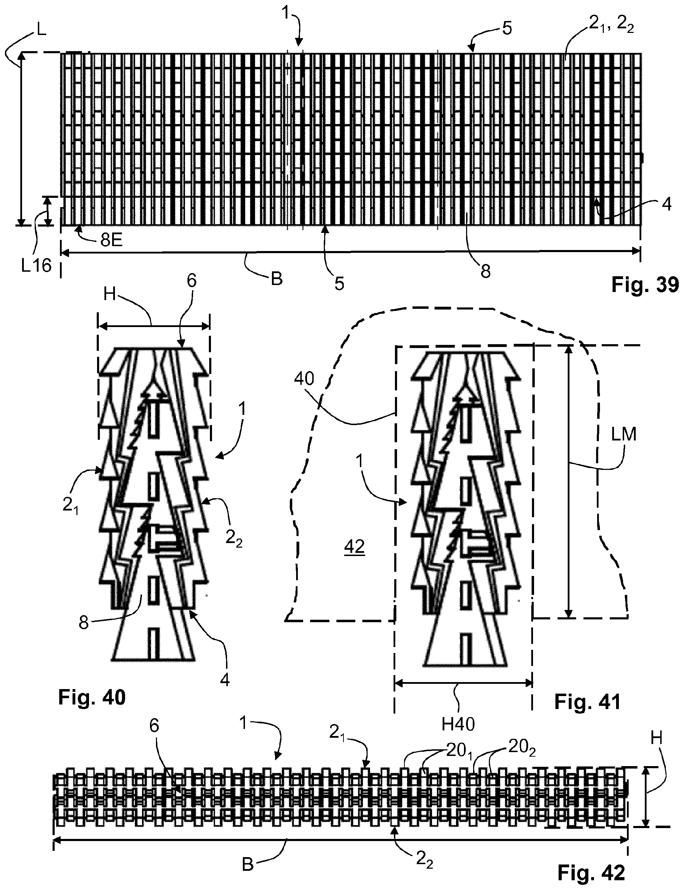

**Figur 39** zeigt eine Draufsicht auf die Ausführungsform des Flachdübels 1 aus Figur 1, bei der das Mittelteil 8 noch nicht zwischen die beiden beabstandeten Elemente 2₁ und 2₂ eingeschoben ist. An dem ersten Ende 4 hat der Flachdübel 1 eine im Wesentlichen lineare Kontur mit der Breite B ausgebildet. An einem zweiten Ende 6 hat der Flachdübel 1 ebenfalls eine lineare Kontur 5 mit der Breite B ausgebildet. Das erste Ende 8E des Mittelteils 8 überragt im nicht montierten Zustand das erste Ende 4 der beabstandeten Elemente 2₁ und 2₂. Das Mittelteil 8 überragt mit einer Länge L16 das erste Ende 4.

**Figur 40** zeigt eine Seitenansicht des Flachdübels 1 der Ausführungsform aus Figur 1 bzw. 39. Der Flachdübel 1 bildet, wie bereits erwähnt, eine Einheit aus den beiden beabstandeten Elementen 2₁ und 2₂ und dem Mittelteil 8. Im nicht montierten Zustand besitzt die Einheit aus den beiden beabstandeten Elementen 2₁ und 2₂ und dem Mittelteil 8 eine Höhe H. Das erste Ende 8E des Mittelteils 8 überragt das erste Ende 4 der beabstandeten Elemente 2₁ und 2₂.

Bei **Figur 41** ist der Flachdübel 1 in eine Mauer 42 eingesetzt. Hierzu wird eine Schlitz 40 in dem Mauerwerk 42 ausgebildet, der im Wesentlichen der Form bzw. den Dimensionen des Flachdübels 1 entspricht. Der Schlitz 40 wird mit einer Höhe H40 und einer Länge LM in das Mauerwerk 42 hinein ausgebildet. Der Schlitz 40 kann mit den auf den Markt erhältlichen Werkzeugen gefertigt werden. Die Höhe H40 ist größer als die Höhe H des Flachdübels 1 im nicht montierten Zustand.

**Figur 42** ist eine Stirnansicht des Flachdübels 1 auf das zweite Ende 6 der Ausführungsform und gemäß dem Montagezustand aus Figur 1 bzw. Figur 39. Der Flachdübel 1 umfasst die beiden Elemente 2₁ und 2₂, die im nicht montierten Zustand zusammen mit dem Mittelteil 8 eine Höhe H und eine Breite B besitzen. Jedes der Elemente 2₁ und 2₂ ist aus der Vielzahl von parallelen Elementen 20₁ und 20₂ aufgebaut.

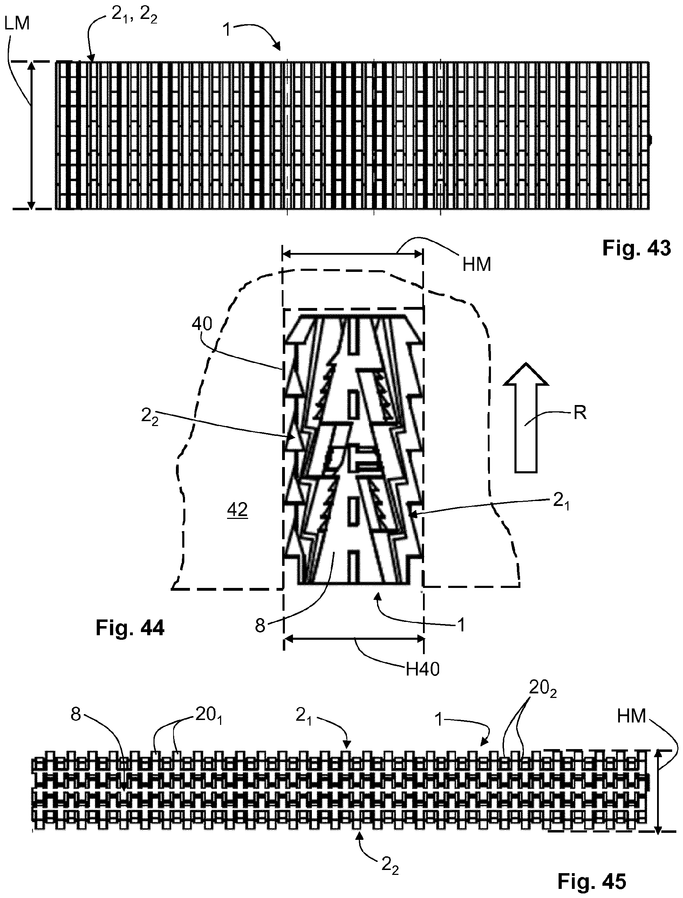

**Figur 43** ist eine Draufsicht auf die Ausführungsform des Flachdübels 1 aus Fig. 1 bzw. Fig. 39 im montierten Zustand. Das Mittelteil 8 (hier nicht mehr zu sehen) ist zwischen die beiden beabstandeten Elemente 2₁ und 2₂ eingeschoben. Der Flachdübel 1 erhält dadurch eine Höhe HM und einer Länge LM.

Wie aus der Darstellung der **Figur 44** ersichtlich ist, entspricht die Höhe HM in wesentlichen der Höhe HM des Schlitzes 40 im Mauerwerk 42. Zur Montage bzw. Befestigung des Flachdübels 1 wird in der hier dargestellten Ausführungsform das Mittelteil 8 in Richtung R zwischen die beabstandeten Elemente 2₁ und 2₂ geschoben. Dadurch wird der Flachdübel 1 im Mauerwerk 42 geklemmt.

**Figur 45** zeigt eine Stirnansicht des montierten Zustands des Flachdübels 1 aus Figur 1 bzw. Figur 39. Der Flachdübel 1 umfasst die beiden Elemente 2₁ und 2₂, die nun im nicht montierten Zustand zusammen mit dem Mittelteil 8 eine Höhe HM besitzen. Die Höhe HM ist größer als die Höhe H des Flachdübels 1 im nicht montierten Zustand. Durch die Zunahme der Höhe wird eine wirkungsvolle Klemmung des Flachdübels 1 in der Mauer 42 erreicht.

**Figur 46** zeigt eine schematische Darstellung der Konfektionierung eines Flachdübels 1. Der für die Montage in einem Mauerwerk 42 vorgesehene Flachdübel 1 kann von einem Block 1B entlang einer Trennlinie 50 abgetrennt werden. Die Trennlinie 50 verläuft im Wesentlichen parallel zu den Elementen 80₁, 80₂ des Mittelteils 8 bzw. den Elementen 20₁, 20₂ der voneinander beabstandeten Elemente 2₁, 2₂. Zur Abtrennung kann jedes mögliche Trennelement 52 verwendet werden.

**Figur 47** zeigt eine Stirnansicht eines Flachdübels 1, der aus mehreren einzelnen Flachdübelelementen 1E zusammengesetzt ist. Die Flachdübelelemente 1E wirken mit der Topologie 25 der jeweiligen Flachdübelelemente 1E form- und kraftschlüssig zusammen, so dass ein Flachdübel 1 mit einer erforderlichen Höhe H, einer erforderlichen Breite B und einer erforderlichen Länge L (hier nicht dargestellt, da in die Zeichenebene hineingerichtet) hergestellt werden kann. Der Flachdübel 1 kann somit aus mehreren Flachdübelelementen 1E in den drei Raumdimensionen aufgebaut werden.

**Figur 48** zeigt eine Stirnansicht eines Flachdübels 1 der im Mittelteil 8 eine Aufnahme 45 für eine Schraube (nicht gargestellt) ausgebildet hat. Die Aufnahme 45 erleichtert das Einschrauben und das Auseinanderdrücken der beiden beabstandeten Elemente 2₁ und 2₂.

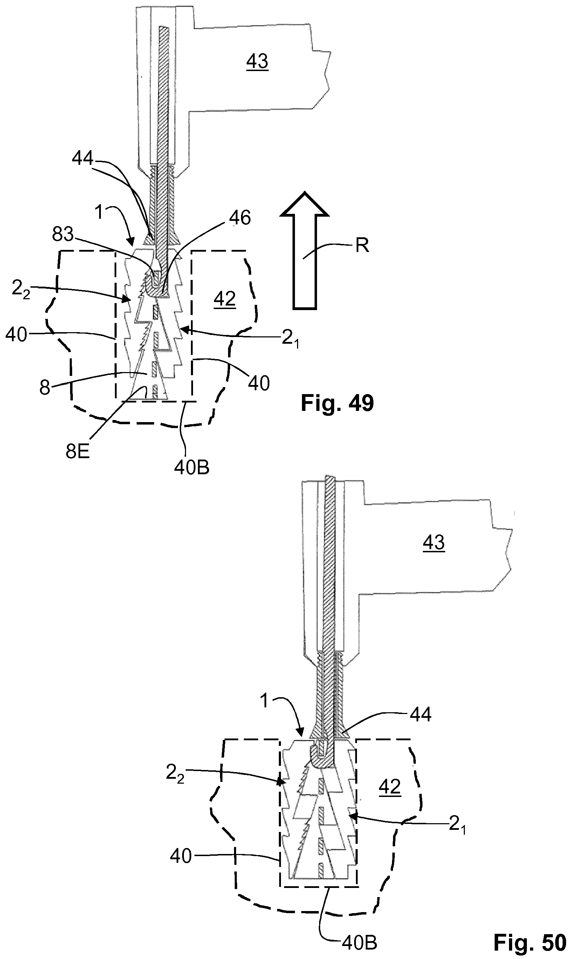

**Figur 49** zeigt eine schematische Darstellung eines Werkzeugs 43 in Wirkzusammenhang mit einem im Mauerwerk 42 zu befestigenden Flachdübel 1. Das Werkzeug 43 besitzt einen Haken 46, der an einer Materialbrücke 83 des Mittelteils 8 eingehakt ist. Das Werkzeug 43 besitzt ein Widerlager 44, das am zweiten Ende 6 des ersten Elements und 2₁ und des zweiten Elements 2₂ anliegt. Der Flachdübel 1 wird derart in den Schlitz 40 gesetzt, dass das erste Ende 8E des Mittelteils 8 einer Basis 40B des Schlitzes 40 gegenüberliegt. Mit dem Werkzeug 43 wird bei dieser Ausführung der Anbringmethode des Flachdübels 1 das Mittelteil 8 in Richtung R gezogen.

In **Figur 50** ist eine schematische Darstellung des Werkzeugs 43 in Wirkzusammenhang mit einem im Mauerwerk 42 befestigten bzw. geklemmten Flachdübel 1 gezeigt. Durch das Ziehen des Mittelteils 8 in Richtung R werden das erste Element 2₁ und das zweite Element 2₂ auseinandergedrückt und der Flachdübel 1 sitzt bereits fest im Schlitz 40. Es ist für einen Fachmann selbstverständlich, dass unterschiedliche Werkzeuge 43 und Methoden zum Anbringen des Flachdübels 1 im Schlitz 40 gewählt werden können, um das erste Element 2₁ und das zweite Element 2₂ auseinanderzudrücken.

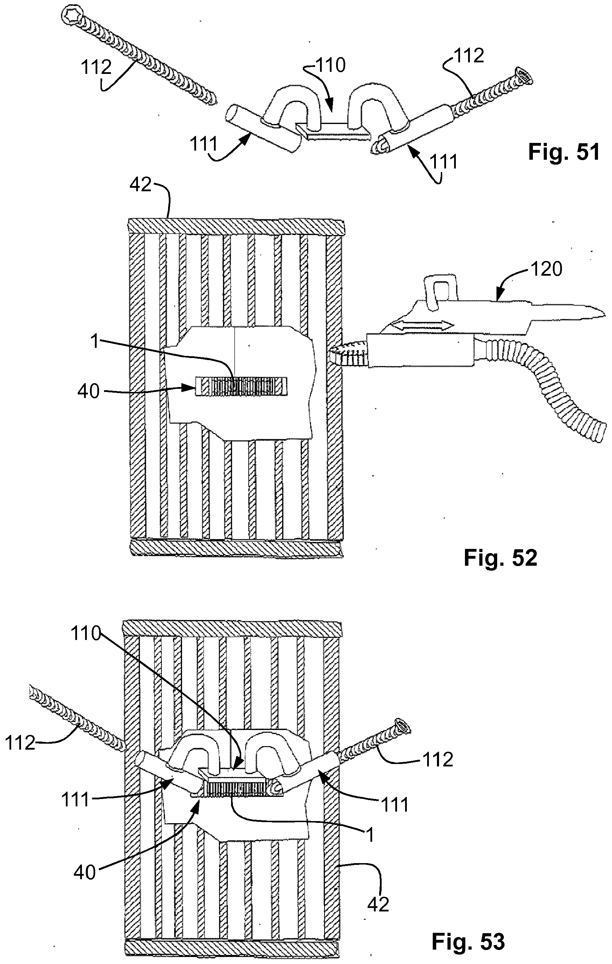

**Figur 51** zeigt eine schematische Darstellung einer Montagehilfe 110 zur Verankerung des erfindungsgemäßen Flachdübels 1 in einem Mauerwerk 42. Die Montagehilfe 110 ist mit zwei sich gegenüberliegenden Führungen 111 für Montageschrauben 112 versehen. Die Montagehilfe 110 kann als ein wiederverwendbares Teil ausgebildet sein.

In **Figur 52** ist die Zuordnung der Montagehilfe 110 zu dem im Schlitz 40 des Mauerwerks 42 sitzenden Flachdübel 1 dargestellt. Der Schlitz 40 wird in das Mauerwerk 42 mit einem motorbetriebenen (bevorzugt mit Elektromotor) Werkzeug 120 geschnitten oder gefräst.

**Figur 53** zeigt eine schematische Darstellung des Schlitzes 40 im Mauerwerk 42 und einen in den Schlitz 40 eingesetzten Flachdübel 1, dem die Montagehilfe 110 zugeordnet ist. Der Flachdübel 1 und die Montagehilfe 110 sind sicher im Schlitz 40 geklemmt. In den Führungen 111 der Montagehilfe 110 können die Montageschrauben 112 geführt werden, um ein sicheres Einschrauben der Montageschrauben 112 in den Flachdübel 1 und somit ein definiertes Verschrauben der Montageschrauben 112 mit dem Mauerwerk 42 zu gewährleisten.

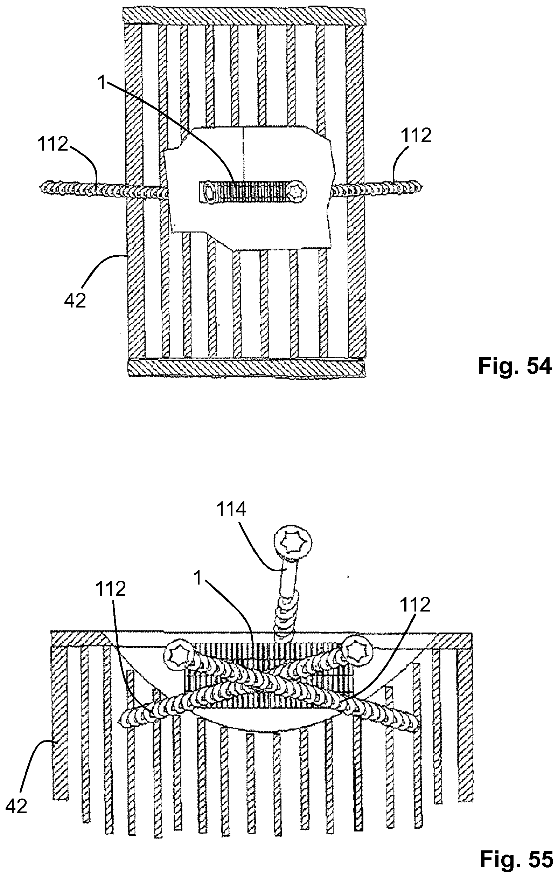

**Figur 54** zeigt eine schematische Darstellung des mit Montageschrauben 112 im Mauerwerk 42 montierten Flachdübels 1. Die Montageschrauben 112 können derart lang gewählt werden, dass sie das Mauerwerk 42 beidseits überragen. Dadurch kann die Verankerung im Mauerwerk 42 weiter verbessert werden.

**Figur 55** zeigt eine schematische Darstellung des mit Montageschrauben 112 im Mauerwerk 42 montierten Flachdübels 1. Die Montageschrauben 112 greifen jeweils seitlich vom Flachdübel 1 in das Mauerwerk 42. Für die Befestigung von zu montierenden Bauteilen (nicht dargestellt) wird eine Befestigungsschraube 114 in den Flachdübel 1 eingedreht. Zu montierende Bauteile können z.B. Geländer, Fensterrahmen oder dergleichen sein.

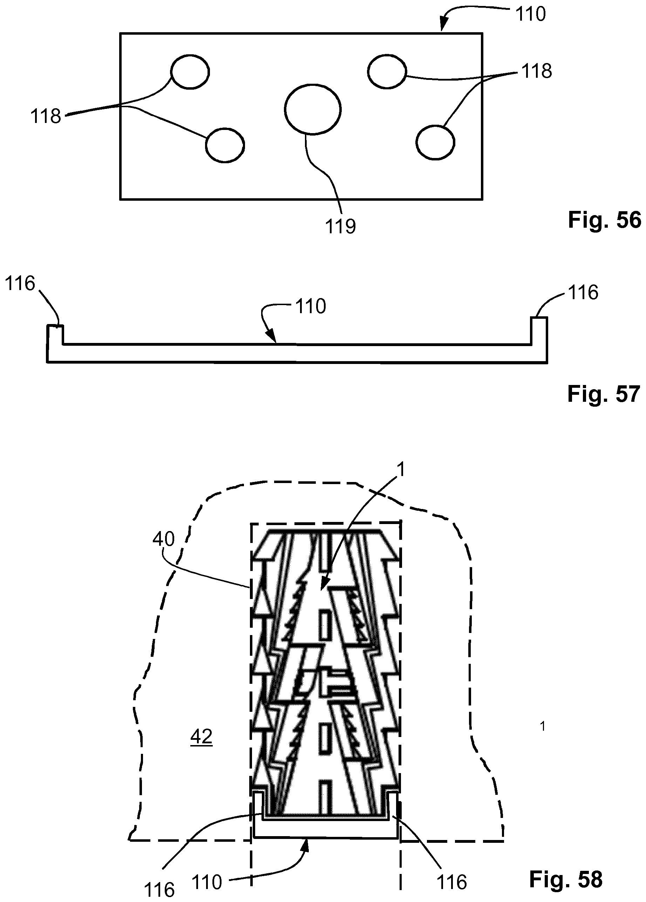

In **Figur 56** ist eine mögliche weitere Ausführungsform einer Montagehilfe 110 für einen Flachdübel 1 dargestellt. Die Montagehilfe 110 kann als eine ebene Platte oder, wie in **Figur 57** dargestellt, als ebene Platte, mit abgewinkelten Enden 116 ausgebildet sein. Die Montagehilfe 110 hat mehrere Montagebohrungen 118 für jeweils eine Montageschraube (siehe Fig. 51) und mindestens eine Befestigungsbohrung 119 für eine Befestigungsschraube 114 ausgebildet. Wie bereits in der Beschreibung zu Fig. 55 erwähnt, können mit der Befestigungsschraube 114 zu montierende Bauteile, wie z.B. Geländer, Fensterrahmen oder dergleichen montiert und sicher befestigt werden.

**Figur 58** zeigt die in Figur 57 dargestellte Ausführungsform der Montagehilfe 110 in Kombination mit dem erfindungsgemäßen Flachdübel 1. Die Montagehilfe 110 wird derart auf den im Schlitz 40 der Mauer 42 sitzenden Flachdübel 1 gesetzt, dass die abgewinkelten Enden 116 am Flachdübel 1 und am Schlitz 40 anliegen. Die Montagehilfe 110 wird mit den Montageschrauben 112 (nicht dargestellt) befestigt, wobei bereits die Montageschrauben 112 für einen Halt des Flachdübels 1 in der Mauer 42 sorgen. Die Montagebohrungen 118 (nicht dargestellt) fungieren als Führungen 111 der Montagehilfe 110 für die Montageschrauben 112. Zur Montage des Bauteils (hier nicht dargestellt) wird die Befestigungsschraube 114 (nicht dargestellt) durch die Montagehilfe 110 in den Flachdübel 1 eingedreht.

### Bezugszeichenliste

- 1: Flachdübel
- 1B: Block
- 1E: Flachdübelelement
- 2₁: erstes beabstandetes Element
- 2₂: zweites beabstandetes Element
- 4: erstes Ende
- 5: lineare Kontur
- 6: zweites Ende
- 6R: Radius
- 7: konvex geformte Kontur
- 8: Mittelteil
- 8E: erstes Ende
- 8Z: zweites Ende
- 15: beabstandetes Ende
- 16: beabstandetes Ende des Mittelteils
- 18: Einhüllende
- 20₁: Element
- 20₂: Element
- 21: innere Seitenfläche
- 22: äußere Seitenfläche
- 23: Materialbrücke
- 25: Topologie
- 26: Bereich
- 27: Raststruktur
- 28: Abschrägung
- 28R: erste Richtung
- 29: Abschrägung
- 29R: zweite Richtung
- 30: Abschrägung
- 40: Schlitz
- 40B: Basis
- 42: Mauer, Mauerwerk
- 43: Werkzeug
- 44: Widerlager
- 45: Aufnahme
- 46: Haken
- 50: Trennlinie
- 52: Trennelement
- 80₁: Element
- 80₂: Element
- 81: erste Seitenfläche
- 82: zweite Seitenfläche
- 83: Materialbrücke
- 84: Ebene
- 85: Topologie
- 86: Freisparung
- 87: Rastelement
- 88: Abschrägung
- 89: Sicherungselement
- 100: Dübelsystem
- 110: Montagehilfe
- 111: Führungen
- 112: Montageschraube
- 114: Befestigungsschraube
- 116: abgewinkeltes Ende
- 118: Montagebohrungen
- 119: Befestigungsbohrung
- 120: Werkzeug
- 1-1: Schnittlinie
- 2-2: Schnittlinie
- 3-3: Schnittlinie
- A: Bereich
- B: Breite
- D: Bereich
- H: Höhe
- H8: Höhe
- H40: Höhe
- HM: Höhe
- HZ: Höhe
- L: Länge
- L15: Länge
- L16: Länge
- LM: Länge
- LG: Gesamtlänge
- P: Bereich
- R: Richtung
- ZE: zentrale Ebene
- A-A: Schnittlinie
- B-B: Schnittlinie
- C-C: Schnittlinie

## Patentansprüche

1. Flachdübel (1) aus einem Mittelteil (8) und zwei voneinander beabstandeten Elementen (2₁, 2₂), zwischen denen das Mittelteil (8) angeordnet ist und jedes der beiden Elemente (2₁, 2₂) ein erstes Ende (4) und ein zweites Ende (6) aufweist, **dadurch gekennzeichnet, dass** die beiden Elemente (2₁, 2₂) eine innere Seitenfläche (21) und eine äußere Seitenfläche (22) definieren, die jeweils eine Topologie (25) ausgebildet haben; das Mittelteil (8) eine erste Seitenfläche (81) und eine zweite Seitenfläche (82) definiert, die jeweils eine Topologie (85) ausgebildet haben; und das Mittelteil (8) und die beiden Elemente (2₁, 2₂) form- und kraftschlüssig zusammenwirken, wobei das Mittelteil (8) dennoch eine relative Beweglichkeit zwischen dem ersten Ende (4) und dem zweiten Ende (6) der beiden Elemente (2₁, 2₂) besitzt.

2. Flachdübel (1) nach Anspruch 1, wobei das Mittelteil (8) und die beiden durch das Mittelteil (8) voneinander beabstandeten Elementen (2₁, 2₂) eine Einheit bilden.

3. Flachdübel (1) nach einem der vorangehenden Ansprüche, wobei das Mittelteil (8) aus einer Vielzahl von Elementen (80₁, 80₂) und die beiden voneinander beabstandeten Elemente (2₁, 2₂) aus einer Vielzahl von Elementen (20₁, 20₂) bestehen, wobei sich die Elemente (80₁, 80₂) des Mittelteils (8) und die Elementen (20₁, 20₂) eines jeden der beabstandeten Elemente (2₁, 2₂) aus einer Vielzahl sich parallel zwischen dem ersten Ende (4) zum zweiten Ende (6) erstreckenden und stoffschlüssig miteinander verbundenen Elementen (20₁, 20₂) besteht.

4. Flachdübel (1) nach Anspruch 3, wobei die Elemente (80₁, 80₂) des Mittelteils (8) unmittelbar aneinandergrenzen und dadurch stoffschlüssig miteinander verbunden sind und die Elemente (20₁, 20₂) der beiden voneinander beabstandeten Elemente (2₁, 2₂) unmittelbar aneinandergrenzen und dadurch stoffschlüssig miteinander verbunden sind.

5. Flachdübel (1) nach Anspruch 4, wobei mindestens ein Flachdübel (1) derart von einem Block (1B) abtrennbar ist, dass eine Trennlinie (50) im Wesentlichen parallel zu den Elementen (80₁, 80₂) des Mittelteils (8) und den Elementen (20₁, 20₂) der voneinander beabstandeten Elemente (2₁, 2₂) verläuft.

6. Flachdübel (1) nach Anspruch 3, wobei das Mittelteil (8) aus einer Vielzahl voneinander beabstandeter Elemente (80₁, 80₂) besteht, die jeweils über mindestens eine Materialbrücke (83) stoffschlüssig miteinander verbunden sind und wobei die beiden voneinander beabstandeten Elemente (2₁, 2₂) aus einer Vielzahl von Elementen (20₁, 20₂) bestehen, die jeweils über mindestens eine Materialbrücke (23) stoffschlüssig miteinander verbunden sind.

7. Flachdübel (1) nach Anspruch 6, wobei mindestens ein Flachdübel (1) derart von einem Block (1B) abtrennbar ist, dass der Flachdübel (1) an der mindestens einen Materialbrücke (83) des Mittelteils (8) und an der mindestens eine Materialbrücke (23) der voneinander beabstandeten Elemente (2, 2₁, 2₂) derart trennbar ist, dass eine Trennlinie (50) parallel zu den Elementen (80₁, 80₂) des Mittelteils (8) und den Elementen (20₁, 20₂) der voneinander beabstandeten Elemente (2, 2₁, 2₂) verläuft.

8. Flachdübel (1) nach den vorangehenden Ansprüchen, wobei im nicht montierten Zustand des Flachdübels (1) das zweite Ende (6) der beabstandeten Elemente (2₁, 2₂) das zweite Ende (8Z) des linear beweglichen Mittelteils (8) überragt und wobei im montierten Zustand ein erstes Ende (8E) des Mittelteils (8) sich einem ersten Ende (4) der beabstandeten Elemente (2, 2₁, 2₂) angenähert hat.

9. Flachdübel (1) nach einem der vorangehenden Ansprüche, wobei die Vielzahl der Elemente (20₁, 20₂) des ersten Elements (2₁) und des zweiten Elements (2₂) die innere Seitenfläche (21) und eine äußere Seitenfläche (22) definieren, die die resultierende Topologie (25) mit einer Vielzahl von Abschrägungen (30) aufweist, die derart ausgebildet sind, dass die Abschrägungen (30) in Richtung auf das zweite Ende (6) und in Richtung auf eine zentrale Ebene (ZE) des Flachdübels (1) hin verlaufen, und wobei die ersten Elemente (80₁) und die zweiten Elemente (80₂) des Mittelteils (8) die erste Seitenfläche (81) und die zweite Seitenfläche (82) des Mittelteils (8) definieren, die die resultierende Topologie (85) mit mindestens einer Abschrägung (88) aufweist, die in Richtung auf das zweite Ende (6) und in Richtung auf eine zentrale Ebene (ZE) des Flachdübels (1) hin verläuft.

10. Flachdübel (1) nach Anspruch 9, wobei die innere Seitenfläche (21) der beiden Elemente (20₁, 20₂) des ersten Elements (2₁) und des zweiten Elements (2₂) ferner in einem Bereich (26) der mindestens einen Abschrägung (30) eine Raststruktur (27) ausgebildet hat, die mit mindestens einem Rastelement (87) des Elements (80₁) des Mittelteils (8) formschlüssig zusammenwirkt.

11. Verfahren zum Anbringen eines Flachdübels (1) in einer Mauer (42), wobei der Flachdübel (1) aus zwei gegenüberliegenden und voneinander beabstandeten Elementen (2₁, 2₂) und einem dazwischen in Richtung auf ein erstes Ende (4) oder ein zweites Ende (6) linear bewegliches Mittelteil (8) besteht, wobei die beiden Elemente (2₁, 2₂) eine innere Seitenfläche (21) und eine äußere Seitenfläche (22) definieren, die jeweils eine Topologie (25) ausgebildet haben, wobei das Mittelteil (8) eine erste Seitenfläche (81) und eine zweite Seitenfläche (82) definiert, die jeweils eine Topologie (85) ausgebildet haben; und das Mittelteil (8) und die beiden Elemente (2₁, 2₂) form und kraftschlüssig zusammenwirken und das Mittelteil (8) dennoch eine relative Beweglichkeit zwischen dem ersten Ende (4) und dem zweiten Ende (6) der beiden Elemente (2₁, 2₂) besitzt, **gekennzeichnet durch** die folgenden Schritte:
• dass ein länglicher Schlitz (40) in die Mauer (42) eingebracht wird, der eine Höhe (H40) und eine Breite besitzt;
• dass der Flachdübel (1) hinsichtlich seinen Abmessungen derart angepasst wird, dass er zumindest eine Breite (B) besitzt, die kleiner ist als die Breite des länglichen Schlitzes (40) und eine Höhe (H) besitzt, die kleiner als die Höhe (H40) des länglichen Schlitzes (40) in der Mauer (25); und
• dass das Mittelteil (8) des Fachdübels (1) derart relativ zwischen dem ersten Ende (4) und dem zweiten Ende (6) der beiden Elemente (2₁, 2₂) bewegt wird, dass der Flachdübel (1) seinen Höhe (H) vergrößert und im Schlitz (40) geklemmt wird.

12. Verfahren nach Anspruch 11, wobei die Anpassung der Abmessungen des Flachdübels (1) an die Breite des länglichen Schlitzes (40) derart durchgeführt wird, dass ein Teil des Flachdübels (1) abgetrennt wird, so dass die Breite des Teils des Flachdübels (1) kleiner ist als die Breite des länglichen Schlitzes (40).

13. Verfahren nach Anspruch 11 oder Anspruch 12, wobei die Anpassung der Abmessungen des Flachdübels (1) an die Breite des länglichen Schlitzes (40) derart durchgeführt wird, dass mindestens zwei Flachdübelelemente (1E) übereinander angeordnet werden, so dass die Höhe des zusammengesetzten Flachdübels (1) kleiner ist als die Höhe (H40) des länglichen Schlitzes (40), wobei jeweils gegenüberliegende Elemente (2₁, 2₂) der Flachdübelelemente (1E) mit Ihrer definierten Topologie (25) form- und kraftschlüssig zusammenwirken.

14. Verfahren nach Anspruch 11, wobei die Anpassung der Abmessungen des Flachdübels (1) an die Breite und die Höhe (H40) des länglichen Schlitzes (40) derart durchgeführt wird, dass mehrere Flachdübelelemente (1E) derart mittels der Topologie (25) der gegenüberliegenden Elemente (2₁, 2₂) der Flachdübelelemente (1E) form- und kraftschlüssig zusammengesetzt werden, dass der zusammengesetzte Flachdübel (1) eine Breite und eine Höhe besitzt, die kleiner ist als die Breite und die Höhe (H40) des länglichen Schlitzes (40).

15. Verfahren nach Anspruch 11, wobei dem im länglichen Schlitz (40) sitzenden Flachdübel (1) eine Montagehilfe (110) zugeordnet wird, Montageschrauben (112) durch Führungen (111) der Montagehilfe (110) geführt und dabei zumindest in den Flachdübel (1) eingedreht werden.

## Claims

1. A biscuit-type dowel (1) made of a middle part (8) and two elements (2₁, 2₂) spaced apart from one another, between which the middle part (8) is arranged, and each of the two elements (2₁, 2₂) comprises a first end (4) and a second end (6), **characterized in that** the two elements (2₁, 2₂) define an inner lateral surface (21) and an outer lateral surface (22), which each have a topology (25) formed; the middle part (8) defines a first lateral surface (81) and a second lateral surface (82), which each have a topology (85) formed; and the middle part (8) and the two elements (2₁, 2₂) interact in a formfitting and friction-locked manner, wherein the middle part (8) nonetheless has a relative mobility between the first end (4) and the second end (6) of the two elements (2₁, 2₂).

2. The biscuit-type dowel (1) according to Claim 1, wherein the middle part (8) and the two elements (2₁, 2₂) spaced apart from one another by the middle part (8) form a unit.

3. The biscuit-type dowel (1) according to one of the preceding claims, wherein the middle part (8) consists of a plurality of elements (80₁, 80₂), and the two elements (2₁, 2₂) spaced apart from one another consist of a plurality of elements (20₁, 20₂), wherein the elements (80₁, 80₂) of the middle part (8) and the elements (20₁, 20₂) of each of the spaced-apart elements (2₁, 2₂) consist of a plurality of elements (20₁, 20₂), which extend in parallel between the first end (4) and the second end (6) and are integrally joined with one another.

4. The biscuit-type dowel (1) according to Claim 3, wherein the elements (80₁, 80₂) of the middle part (8) directly adjoin one another and are thus integrally joined with one another, and the elements (20₁, 20₂) of the two elements (2₁, 2₂) spaced apart from one another directly adjoin one another and are thus integrally joined with one another.

5. The biscuit-type dowel (1) according to Claim 4, wherein at least one biscuit-type dowel (1) is detachable from a block (1B) in such a way that a partition line (50) extends essentially parallel to the elements (80₁, 80₂) of the middle part (8) and the elements (20₁, 20₂) of the elements (2₁, 2₂) spaced apart from one another.

6. The biscuit-type dowel (1) according to Claim 3, wherein the middle part (8) consists of a plurality of elements (80₁, 80₂) spaced apart from one another, which are each integrally joined with one another via at least one material bridge (83), and wherein the two elements (2₁, 2₂) spaced apart from one another consist of a plurality of elements (20₁, 20₂), which are each integrally joined with one another via at least one material bridge (23).

7. The biscuit-type dowel (1) according to Claim 6, wherein at least one biscuit-type dowel (1) is detachable from a block (1B) in such a way that the biscuit-type dowel (1) is detachable at the at least one material bridge (83) of the middle part (8) and at the at least one material bridge (83) of the elements (2, 2₁, 2₂) spaced apart from one another in such a way that a partition line (50) extends in parallel to the elements (80₁, 80₂) of the middle part (8) and the elements (20₁, 20₂) of the elements (2, 2₁, 2₂) spaced apart from one another.

8. The biscuit-type dowel (1) according to any one of the preceding claims, wherein in the non-installed state of the biscuit-type dowel (1), the second end (6) of the spaced-apart elements (2₁, 2₂) protrudes beyond the second end (8Z) of the linearly movable middle part (8), and wherein in the installed state, a first end (8E) of the middle part (8) has approached a first end (4) of the spaced-apart elements (2, 2₁, 2₂).

9. The biscuit-type dowel (1) according to any one of the preceding claims, wherein the plurality of the elements (20₁, 20₂) of the first element (2₁) and the second element (2₂) define the inner lateral surface (21) and an outer lateral surface (22), which comprises the resulting topology (25) having a plurality of bevels (30), which are formed in such a way that the bevels (30) extend in the direction toward the second end (6) and in the direction toward a central plane (ZE) of the biscuit-type dowel (1), and wherein the first elements (80₁) and the second elements (80₂) of the middle part (8) define the first lateral surface (81) and the second lateral surface (82) of the middle part (8), which comprises the resulting topology (85) having at least one bevel (88), which extends in the direction toward the second end (6) and in the direction toward a central plane (ZE) of the biscuit-type dowel (1).

10. The biscuit-type dowel (1) according to Claim 9, wherein the inner lateral surface (21) of the two elements (20₁, 20₂) of the first element (2₁) and the second element (2₂) has furthermore formed, in a region (26) of the at least one bevel (30), a catch structure (27), which interacts in a formfitting manner with at least one catch element (87) of the element (80₁) of the middle part (8).

11. A method for installing a biscuit-type dowel (1) in a wall (42), wherein the biscuit-type dowel (1) consists of two opposing elements (2₁, 2₂) spaced apart from one another and a middle part (8) linearly movable therebetween in the direction toward a first end (4) or a second end (6), wherein the two elements (2₁, 2₂) define an inner lateral surface (21) and an outer lateral surface (22), which each have a topology (25) formed, wherein the middle part (8) defines a first lateral surface (81) and a second lateral surface (82), which each have a topology (85) formed, and the middle part (8) and the two elements (2₁, 2₂) interact in a formfitting and friction-locked manner and the middle part (8) nonetheless has a relative mobility between the first end (4) and the second end (6) of the two elements (2₁, 2₂), **characterized by** the following steps:
an oblong slot (40) is introduced into the wall (42), which has a height (H40) and a width;
the biscuit-type dowel (1) is adapted with respect to its dimensions in such a way that it has at least one width (B), which is less than the width of the oblong slot (40), and has one height (H), which is less than the height (H40) of the oblong slot (40) in the wall (25); and
the middle part (8) of the biscuit-type dowel (1) is relatively moved between the first end (4) and the second end (6) of the two elements (2₁, 2₂) in such a way that the biscuit-type dowel (1) increases its height (H) and is clamped in the slot (40).

12. The method according to Claim 11, wherein the adaptation of the dimensions of the biscuit-type dowel (1) to the width of the oblong slot (40) is carried out in such a way that a part of the biscuit-type dowel (1) is detached, so that the width of the part of the biscuit-type dowel (1) is less than the width of the oblong slot (40).

13. The method according to Claim 11 or Claim 12, wherein the adaptation of the dimensions of the biscuit-type dowel (1) to the width of the oblong slot (40) is carried out in such a way that at least two biscuit-type dowel elements (1E) are arranged one over another, so that the height of the assembled biscuit-type dowel (1) is less than the height (H40) of the oblong slot (40), wherein respective opposing elements (2₁, 2₂) of the biscuit-type dowel elements (1E) interact in a formfitting and friction-locked manner with the defined topology (25) thereof.

14. The method according to Claim 11, wherein the adaptation of the dimensions of the biscuit-type dowel (1) to the width and the height (H40) of the oblong slot (40) is carried out in such a way that multiple biscuit-type dowel elements (1E) are assembled in a friction-locked and formfitting manner by means of the topology (25) of the opposing elements (2₁, 2₂) of the biscuit-type dowel elements (1E) in such a way that the assembled biscuit-type dowel (1) has a width and a height which is less than the width and the height (H40) of the oblong slot (40).

15. The method according to Claim 11, wherein an installation aid (110) is associated with the biscuit-type dowel (1) seated in the oblong slot (40), installation screws (112) are guided through guides (111) of the installation aid (110) and at the same time are screwed at least into the biscuit-type dowel (1).

## Revendications

1. Cheville plate (1) composée d'une partie médiane (8) et de deux éléments (2₁, 2₂) écartés l'un de l'autre entre lesquels la partie médiane (8) est disposée, chacun des deux éléments (2₁, 2₂) présentant une première extrémité (4) et une deuxième extrémité (6), **caractérisée en ce que** les deux éléments (2₁, 2₂) définissent une surface latérale intérieure (21) et une surface latérale extérieure (22) dans chacune desquelles une topologie (25) est formée ; la partie médiane (8) définit une première surface latérale (81) et une deuxième surface latérale (82) dans chacune desquelles une topologie (85) est formée ; et la partie médiane (8) et les deux éléments (2₁, 2₂) coopèrent par engagement positif et par friction, la partie médiane (8) étant cependant relativement mobile entre la première extrémité (4) et la deuxième extrémité (6) des deux éléments (2₁, 2₂).

2. Cheville plate (1) selon la revendication 1, dans laquelle la partie médiane (8) et les deux éléments (2₁, 2₂) écartés l'un de l'autre par la partie médiane (8) forment une unité.

3. Cheville plate (1) selon l'une des revendications précédentes, dans laquelle la partie médiane (8) se compose d'une pluralité d'éléments (80₁, 80₂) et les deux éléments (2₁, 2₂) écartés l'un de l'autre se composent d'une pluralité d'éléments (20₁, 20₂), les éléments (80₁, 80₂) de la partie médiane (8) et les éléments (20₁, 20₂) de chacun des éléments écartés (2₁, 2₂) se composant d'une pluralité d'éléments (20₁, 20₂) qui s'étendent parallèlement de la première extrémité (4) à la deuxième extrémité (6) et sont reliés entre eux par solidarité de matière.

4. Cheville plate (1) selon la revendication 3, dans laquelle les éléments (80₁, 80₂) de la partie médiane (8) sont directement contigus et ainsi reliés entre eux par solidarité de matière, et les éléments (20₁, 20₂) des deux éléments écartés (2₁, 2₂) sont directement contigus et ainsi reliés entre eux par solidarité de matière.

5. Cheville plate (1) selon la revendication 4, dans laquelle au moins une cheville plate (1) peut être découpée dans un bloc (1B) de telle façon qu'une ligne de séparation (50) soit sensiblement parallèle aux éléments (80₁, 80₂) de la partie médiane (8) et aux éléments (20₁, 20₂) des éléments écartés (2₁, 2₂).

6. Cheville plate (1) selon la revendication 3, dans laquelle la partie médiane (8) se compose d'une pluralité d'éléments (80₁, 80₂) écartés les uns des autres, qui sont reliés entre eux par solidarité de matière par l'intermédiaire d'au moins un pont de matériau (83) pour chacun et dans laquelle les deux éléments écartés (2₁, 2₂) se composent d'une pluralité d'éléments (20₁, 20₂) qui sont reliés entre eux par solidarité de matière par l'intermédiaire d'au moins un pont de matériau (23) pour chacun.

7. Cheville plate (1) selon la revendication 6, dans laquelle au moins une cheville plate (1) peut être découpée dans un bloc (1B) de telle manière que la cheville plate (1) puisse être séparée au niveau de l'au moins un pont de matériau (83) de la partie médiane (8) et au niveau de l'au moins un pont de matériau (23) des éléments écartés (2, 2₁, 2₂) de sorte qu'une ligne de séparation (50) soit parallèle aux éléments (80₁, 80₂) de la partie médiane (8) et aux éléments (20₁, 20₂) des éléments écartés (2, 2₁, 2₂).

8. Cheville plate (1) selon les revendications précédentes dans laquelle, dans l'état non monté de la cheville plate (1), la deuxième extrémité (6) des éléments écartés (2₁, 2₂) dépasse de la deuxième extrémité (8Z) de la partie médianes (8) mobile de façon linéaire et dans laquelle ; et dans l'état monté, une première extrémité (8E) de la partie médiane (8) s'est rapprochée d'une première extrémité (4) des éléments écartés (2, 2₁, 2₂).

9. Cheville plate (1) selon l'une des revendications précédentes, dans laquelle la pluralité d'éléments (20₁, 20₂) du premier élément (2₁) et du deuxième élément (2₂) définissent la surface latérale intérieure (21) et une surface latérale extérieure (22) qui présente la topologie (25) en résultant avec une pluralité de biseaux (30) conformés de telle manière que les biseaux (30) soient orientés vers la deuxième extrémité (6) et vers un plan central (ZE) de la cheville plate (1), et dans laquelle les premiers éléments (80₁) et les deuxièmes éléments (80₂) de la partie médiane (8) définissent la première surface latérale (81) et la deuxième surface latérale (82) de la partie médiane (8) qui présente la topologie (85) en résultant avec au moins un biseau (88) orienté vers la deuxième extrémité (6) et vers un plan central (ZE) de la cheville plate (1).

10. Cheville plate (1) selon la revendication 9, dans laquelle la surface latérale intérieure (21) des deux éléments (20₁, 20₂) du premier élément (2₁) et du deuxième élément (2₂) forme en outre dans une zone (26) de l'au moins un biseau (30) une structure d'enclenchement (27) qui coopère en engagement positif avec au moins un élément d'enclenchement (87) de l'élément (80₁) de la partie médiane (8).

11. Procédé de montage d'une cheville plate (1) dans une paroi (42), dans lequel la cheville plate (1) se compose de deux éléments (2₁, 2₂) qui se font face et sont écartés l'un de l'autre et d'une partie médiane (8) mobile entre eux de façon linéaire en direction d'une première extrémité (4) ou d'une deuxième extrémité (6), dans lequel les deux éléments (2₁,2₂) définissent une surface latérale intérieure (21) et une surface latérale extérieure (22) dans chacune desquelles une topologie (25) est formée, la partie médiane (8) définissant une première surface latérale (81) et une deuxième surface latérale (82) dans chacune desquelles une topologie (85) est formée, et la partie médiane (8) et les deux éléments (2₁, 2₂) coopèrent par engagement positif et par friction et la partie médiane (8) est cependant relativement mobile entre la première extrémité (4) et la deuxième extrémité (6) des deux éléments (2₁, 2₂), **caractérisé en ce qu'**il comprend les étapes suivantes :
- une fente allongée (40), ayant une hauteur (H40) et une largeur, est formée dans la paroi (42) ;
- les dimensions de la cheville plate (1) sont adaptées de telle façon qu'elle possède au moins une largeur (B) plus petite que la largeur de la fente allongée (40) et une hauteur (H) plus petite que la hauteur (H40) de la fente allongée (40) dans la paroi (25) ; et
- la partie médiane (8) de la cheville plate (1) est déplacée entre la première extrémité (4) et la deuxième extrémité (6) des deux éléments (2₁, 2₂) de telle manière que la hauteur (H) de la cheville plate (1) augmente et qu'elle se coince dans la fente (40).

12. Procédé selon la revendication 11, dans lequel les dimensions de la cheville plate (1) sont adaptées à la largeur de la fente allongée (40) de telle manière qu'une partie de la cheville plate (1) est détachée, de sorte que la largeur de la partie de la cheville plate (1) est plus petite que la largeur de la fente allongée (40).

13. Procédé selon la revendication 11 ou la revendication 12, dans lequel les dimensions de la cheville plate (1) sont adaptées à la largeur de la fente allongée (40) de telle manière qu'au moins deux éléments de cheville plate (1E) soient disposés l'un au-dessus de l'autre, de sorte que la hauteur de la cheville plate (1) est plus petite que la hauteur (H40) de la fente allongée (40), les éléments (2₁, 2₂) des éléments de cheville plate (1E) qui se font face coopérant par engagement positif et par friction avec leur topologie (25) définie.

14. Procédé selon la revendication 11, dans lequel les dimensions de la cheville plate (1) sont adaptées à la largeur et à la hauteur (H40) de la fente allongée (40) de telle manière que plusieurs éléments de cheville plate (1E) sont assemblés au moyen de la topologie (25) des éléments (2₁, 2₂) opposés des éléments de cheville plate (1E) par engagement positif et par friction de sorte que la cheville plate (1) assemblée a une largeur et une hauteur plus petites que la largeur et la hauteur (H40) de la fente allongée (40).

15. Procédé selon la revendication 11, dans lequel une aide au montage (110) est associée à la cheville plate (1) posée dans la fente allongée (40), des vis de montage (112) sont passées à travers des guides (111) de l'aide au montage (110) et vissées au moins dans la cheville plate (1).
